# EUROPEAN PATENT APPLICATION

(11) **EP 4 852 530 A1**
(43) Date of publication of application: **09.12.2026**
(21) Application number: 24937810.0
(22) Date of filing: 25.12.2024
(51) Int. Cl.: H04W 52/02

(54) **SYSTEM MESSAGE UPDATING METHOD AND APPARATUS, AND RELATED SYSTEM**

(30) Priority: 30.04.2024 CN 202410551251; 11.07.2024 CN 202410934131
(71) Applicant: Honor Device Co., Ltd., Shenzhen, Guangdong 518040 (CN)
(72) Inventor: ZHANG, Mingzhu, Shenzhen, Guangdong 518040 (CN); SHAN, Baokun, Shenzhen, Guangdong 518040 (CN); PANG, Lingli, Shenzhen, Guangdong 518040 (CN); TANG, Xiaoxuan, Shenzhen, Guangdong 518040 (CN)
(74) Representative: MERH-IP Matias Erny Reichl Hoffmann Patentanwälte PartG mbB
(86) International application number: PCT/CN2024/142226
(87) International publication number: WO 2025/227784

(57) **Abstract**

This application provides a method for system message update, an apparatus, and a related system. The method includes: receiving first indication information, and sending a first system message request to request a first system message, where the first indication information indicates the system message update. According to the technical solution provided in this application, network energy saving may be implemented when the first system message is modified.

## Description

This application claims priorities to Chinese Patent Application No. 202410551251.2, filed with the China National Intellectual Property Administration on April 30, 2024 and entitled "METHOD FOR FIRST SYSTEM MESSAGE REQUEST, APPARATUS, AND RELATED SYSTEM", and to Chinese Patent Application No. 202410934131.0, filed with the China National Intellectual Property Administration on July 11, 2024 and entitled "METHOD FOR SYSTEM MESSAGE UPDATE, APPARATUS, AND RELATED SYSTEM", both of which are incorporated herein by reference in their entireties.

### TECHNICAL FIELD

This application relates to the field of wireless communication technologies, and in particular, to a method for system message update, an apparatus, and a related system.

### BACKGROUND

A system information block 1 (system information block type 1, SIB1) is an important system information block in a 5th generation mobile network (5th generation mobile network, 5G) system. The SIB1 includes important information such as cell selection, cell configuration, and scheduling and modification of another system broadcast message.

Currently, the SIB1 is periodically sent in a cell, with a sending period ranging from 20 ms to 160 ms. An occasion for sending the SIB1 may be determined by configuration parameters in a master information block (master control information, MIB) and downlink scheduling on a network side. To satisfy energy saving requirements of 5G networks, in a research topic of network energy saving (network energy saving), the network side is allowed to not periodically send the SIB1, but to send a first system broadcast message request when a terminal device needs to obtain the SIB1. For example, the terminal device sends an uplink-wake up signal (uplink-wake up signaling, UL-WUS) to the network side, and the network side delivers an SIB1 after receiving a UL-WUS request from the terminal device. This is referred to as a request-based (or on-demand) SIB1 (on demand SIB1, OD-SIB1). The OD-SIB1 reduces sending of the SIB1 from the network side to save network power. A cell in which the SIB1 is not periodically sent and the terminal device in an idle/inactive mode may request the SIB1 through a request of the OD-SIB1 may be referred to as an NES cell.

The network side may deliver paging for a system message update to the terminal device in a modification period (modification period, MP) of the SIB1 of the cell, and deliver an updated SIB1 in a next MP following the MP in which the paging is delivered. In this case, there is a possible scenario: When the SIB1 is modified, if no terminal device camps on the NES cell, and the NES cell sends the updated SIB1, no terminal device receives the updated SIB1 sent by the NES cell, resulting in resource waste. Therefore, how to implement network energy saving is an urgent problem to be resolved.

### SUMMARY

Embodiments of this application provide a method for system message update, an apparatus, and a related system. When a terminal device needs to obtain a first system message, the terminal device may trigger a request message to obtain a valid first system message, thereby implementing network energy saving.

According to a first aspect, this application provides a method for system message update. The method may be applied to a terminal device, or may be applied to an apparatus in a terminal device (for example, a chip, a chip system, or a circuit), or an apparatus that can be used in conjunction with a terminal device. The following uses an example in which the method is applied to the terminal device for description. The method may include: receiving first indication information, and sending a first system message request to request a first system message, where the first indication information indicates the system message update.

A network side may deliver, to the terminal device, indication information (for example, the first indication information) indicating the system message update. Different from a conventional technology in which the network side continues to deliver an updated first system message after the indication information is delivered, in this embodiment of this application, after receiving the indication information indicating the system message update from the network side, the terminal device may send the first system message request to request the first system message. In other words, when the first system message is modified, the terminal device needs to actively request the first system message. This avoids resource waste caused by the network side sending the updated first system message but no terminal device receiving the updated first system message, thereby allowing for network energy saving when the first system message is modified.

In a possible implementation, the receiving first indication information, and sending a first system message request to request a first system message includes: sending the first system message request to request the first system message if the terminal device does not detect an updated first system message when the first indication information is received.

According to this embodiment of this application, when receiving the first indication information, the terminal device may detect the first system message. If the terminal device detects the first system message, the terminal device may not need to send the first system message request. Alternatively, if the terminal device does not detect the first system message, the terminal device sends the first system message request. This reduces signaling overheads.

In a possible implementation, the receiving first indication information, and sending a first system message request to request a first system message includes: not sending the first system message request to request the first system message if the terminal device detects an updated first system message when the first indication information is received.

In a possible implementation, that the terminal device detects the updated first system message includes: the terminal device detects related information of the first system message; and if stored related information of the first system message is the same as the detected related information of the first system message, determines that no updated first system message is detected; or determines that no updated first system message is detected when the terminal device does not receive the first system message; or determines that no updated first system message is detected when the terminal device does not detect the first system message within a preset time after the first indication information is received, where the preset time is a time from receiving the first indication information to sending the first system message request. Alternatively, the terminal device detects related information of the first system message; and if stored related information of the first system message is different from the detected related information of the first system message, determines that the updated first system message is detected; or determines that the updated first system message is detected when the terminal device receives the first system message; or determines that the updated first system message is detected when the terminal device detects the first system message within a preset time after the first indication information is received.

According to this embodiment of this application, several implementations for the terminal device to detect the updated first system message may be provided, so that the terminal device can flexibly select an implementation for detecting the updated first system message. The related information of the first system message may include a version number of the first system message, content information included in the first system message, and the like. The content information included in the first system message may include, for example, cell reselection information, cell selection information, information about a neighboring cell, access control information, and the like.

In a possible implementation, the preset time is before an end of a next MP following an MP in which the first indication information is received.

In a possible implementation, the receiving first indication information, and sending a first system message request to request a first system message includes: receiving the first indication information, and sending the first system message request within a first time to request the first system message.

In a possible implementation, the first time is a moment of a latest available resource for sending the first system message request after the first indication information is received, the moment of the latest available resource for sending the first system message request is a moment with a shortest time interval between a moment of the resource and a moment at which the first indication information is received, the moment is a system frame number, a subframe, a slot, or a symbol of the resource, and the moment is a start moment or an end moment of the resource; or the first time is a current MP of the modification period MP in which the first indication information is received; or the first time is a moment of a latest available resource for sending the first system message request after the first indication information is received within the current MP; or the first time is a next MP following the modification period MP in which the first indication information is received; or the first time is before a time T1 of a next MP following the modification period MP in which the first indication information is received; or the first time is preset duration after the first indication information is received, or the first time is preset duration after a start time of a next MP following the modification period MP in which the first indication information is received.

According to this embodiment of this application, some implementations for determining when the terminal device sends the first system message request after the first indication information is received may be provided, so that the terminal device can select a sending time according to requirements of the terminal device, thereby enhancing flexibility of the solution.

In a possible implementation, the resource is a random access resource, an uplink grant resource, or an uplink resource, and the random access resource is a contention-based random access resource, a non-contention-based random access resource, or a dedicated random access resource.

In a possible implementation, the resource is the contention-based random access resource, and the sending the first system message request includes: sending the first system message request through a random access message 3. Alternatively, the resource is the non-contention-based random access resource, and the sending the first system message request includes: sending the first system message request through a random access preamble, where the random access preamble is used to request the first system message.

In a possible implementation, the method further includes: receiving a random access response, where the random access response indicates that random access succeeds.

In a possible implementation, the method further includes: receiving the updated first system message.

In a possible implementation, the first indication information is included in a paging message or a short message.

In a possible implementation, the first indication information is included in a short message field in downlink control information (downlink control information, DCI) format 1_0.

In a possible implementation, the first system message is an SIB1.

In a possible implementation, the first system message request is an on-demand SIB1 or a WUS.

According to a second aspect, this application provides a method for system message update. The method may be applied to a network device, or may be applied to an apparatus in a network device (for example, a chip, a chip system, or a circuit), or an apparatus that can be used in conjunction with a network device. The following uses an example in which the method is applied to the network device for description. The method may include: sending first indication information to a terminal device, where the first indication information indicates a system message modification; and sending an updated first system message when a first system message request is received from the terminal device.

A network side may deliver, to the terminal device, indication information (for example, the first indication information) indicating the system message update. Different from a conventional technology in which the network side continues to deliver an updated first system message after the indication information is delivered, in this embodiment of this application, after delivering the indication information, the network device sends the updated first system message after the first system message request is received from the terminal device. In other words, when the first system message is modified, the terminal device needs to actively request the first system message. This avoids resource waste caused by the network side sending the updated first system message but no terminal device receiving the updated first system message, thereby allowing for network energy saving when the first system message is modified.

It should be understood that the second aspect may be performed by the network device. Specific content of the second aspect corresponds to the content of the first aspect. For a corresponding feature of the second aspect and achieved beneficial effects, refer to the descriptions of the first aspect. To avoid repetition, detailed descriptions are appropriately omitted herein.

In a possible implementation, the method may further include: not sending the first system message or not paging the terminal device when the first system message request from the terminal device is not received.

In a possible implementation, the sending an updated first system message when a first system message request is received from the terminal device includes: sending the updated first system message within a second time when the first system message request is received from the terminal device.

In a possible implementation, the second time is a next MP or a second next MP following a modification period MP of the first indication information; or the second time is a time T2 of a next MP following a modification period MP of the first indication information; or the second time is a preset time after the first system message request is received from the terminal device.

In a possible implementation, the not sending the first system message when the first system message request from the terminal device is not received includes: not sending the updated first system message in the next MP following the modification period MP of the first indication information when the first system message request from the terminal device is not received.

In a possible implementation, the receiving the first system message request from the terminal device includes: receiving the first system message request from the terminal device by using a random access resource, an uplink grant resource, or an uplink resource, where the random access resource is a contention-based random access resource, a non-contention-based random access resource, or a dedicated random access resource.

In a possible implementation, the resource is the contention-based random access resource, and the receiving the first system message request from the terminal device includes: receiving the first system message request through a random access message 3. Alternatively, the resource is the non-contention-based random access resource, and the receiving the first system message request from the terminal device includes: receiving the first system message request through a random access preamble, where the random access preamble is used to request the first system message.

In a possible implementation, the method may further include: sending a random access response, where the random access response indicates that random access succeeds.

In a possible implementation, the first indication information is included in a paging message or a short message.

In a possible implementation, the first indication information is included in a short message field in DCI format 1_0.

In a possible implementation, the first system message is an SIB1.

In a possible implementation, the first system message request is an on-demand SIB1 or a WUS.

According to a third aspect, this application provides a method for system message update. The method may be applied to a terminal device, or may be applied to an apparatus in a terminal device (for example, a chip, a chip system, or a circuit), or an apparatus that can be used in conjunction with a terminal device. The following uses an example in which the method is applied to the terminal device for description. The method may include: sending first information, where the first information is used to request to determine whether a first system message is valid.

In this embodiment of this application, the terminal device may actively send the first information to a network device to request whether the first system message is valid. The network device determines whether the first system message is valid, and sends an updated first system message to the terminal device when the first system message is invalid. This avoids resource waste caused by the network side sending the updated first system message but no terminal device receiving the updated first system message, thereby allowing for network energy saving when the first system message is modified.

In a possible implementation, the sending first information includes: periodically sending the first information.

In a possible implementation, the periodically sending the first information includes: periodically sending the first information within first duration, where one period is an MP of one cell, and the first duration is shorter than the MP of the cell.

In a possible implementation, the sending first information includes: sending the first information by using a random access resource, an uplink grant resource, or an uplink resource, where the random access resource is a contention-based random access resource or a non-contention-based random access resource.

In a possible implementation, the resource is the contention-based random access resource, and the sending the first information includes: sending the first information through a random access message 3. Alternatively, the resource is the non-contention-based random access resource, and the sending first information includes: sending the first information through a random access preamble, where the random access preamble indicates the first information.

In a possible implementation, the method further includes: receiving a random access response, where the random access response indicates that random access succeeds.

In a possible implementation, the first system message is an SIB1.

According to a fourth aspect, this application provides a method for system message update. The method may be applied to a network device, or may be applied to an apparatus in a network device (for example, a chip, a chip system, or a circuit), or an apparatus that can be used in conjunction with a network device. The following uses an example in which the method is applied to the network device for description. The method may include: receiving first information, and determining whether a first system message is valid, where the first information is used to request to determine whether the first system message is valid; and if it is determined that the first system message is invalid, broadcasting the first system message and/or sending second information to a terminal device, where the second information indicates whether the first system message is valid.

In this embodiment of this application, the network device receives the first information actively sent by the terminal device, and determines, based on the first information, whether the first system message is valid. Based on active information exchange of the terminal device, resource waste caused by the network device sending information to the terminal device but no terminal device receiving the information can be avoided, thereby allowing for network energy saving when the first system message is modified. Further, the network device determines to send an updated first system message to the terminal device when the first system message is invalid. This avoids resource waste caused by the network side sending the updated first system message but no terminal device receiving the updated first system message, thereby allowing for network energy saving when the first system message is modified.

It should be understood that the fourth aspect may be performed by the network device. Specific content of the fourth aspect corresponds to the content of the third aspect. For a corresponding feature of the fourth aspect and achieved beneficial effects, refer to the descriptions of the third aspect. To avoid repetition, detailed descriptions are appropriately omitted herein.

In a possible implementation, the method may further include: if it is determined that the first system message is valid, broadcasting an acknowledgment message to the terminal device, where the acknowledgment message is used to confirm that the first system message is valid.

In a possible implementation, that the first system message is valid includes: if it is detected that related information of the first system message is the same as related information of the first system message used by the terminal device, the first system message is valid; or if it is detected that related information of the first system message is different from related information of the first system message used by the terminal device, the first system message is invalid.

In a possible implementation, the receiving first information includes: receiving the first information by using a random access resource, an uplink grant resource, or an uplink resource, where the random access resource is a contention-based random access resource or a non-contention-based random access resource.

In a possible implementation, the resource is the contention-based random access resource, and the receiving first information includes: receiving the first information through a random access message 3. Alternatively, the resource is the non-contention-based random access resource, and the receiving first information includes: receiving the first information through a random access preamble, where the random access preamble indicates the first information.

In a possible implementation, the method may further include: sending a random access response, where the random access response indicates that random access succeeds.

In a possible implementation, the first system message is an SIB1.

According to a fifth aspect, an embodiment of this application provides a communication apparatus. The communication apparatus may be a terminal device, or may be an apparatus in a terminal device (for example, a chip, a chip system, or a circuit).

For beneficial effects, refer to the descriptions of the first aspect. Details are not described herein again. The apparatus has a function of implementing behavior in the method instance of the first aspect. The function may be implemented by hardware, or may be implemented by hardware by executing corresponding software. The hardware or the software includes one or more modules corresponding to the foregoing function.

In a possible implementation, the communication apparatus may include:
a transceiver unit, configured to receive first indication information, and send a first system message request to request a first system message, where the first indication information indicates a system message update.

In a possible implementation, the transceiver unit that is configured to receive the first indication information, and send the first system message request to request the first system message is specifically configured to: send the first system message request to request the first system message if the terminal device does not detect an updated first system message when the first indication information is received.

In a possible implementation, the transceiver unit that is configured to receive the first indication information, and send the first system message request to request the first system message is specifically configured to: not send the first system message request to request the first system message if the terminal device detects an updated first system message when the first indication information is received.

In a possible implementation, the communication apparatus may further includes a processing unit, and the processing unit that is configured to detect the updated first system message is specifically configured to: detect related information of the first system message; and if stored related information of the first system message is the same as the detected related information of the first system message, determine that no updated first system message is detected; or determine that no updated first system message is detected when the terminal device does not receive the first system message; or determine that no updated first system message is detected when the terminal device does not detect the first system message within a preset time after the first indication information is received, where the preset time is a time from receiving the first indication information to sending the first system message request; or detect related information of the first system message; and if stored related information of the first system message is different from the detected related information of the first system message, determine that the updated first system message is detected; or determine that the updated first system message is detected when the transceiver unit receives the first system message; or determine that the updated first system message is detected when the transceiver unit detects the first system message within a preset time after the first indication information is received.

In a possible implementation, the preset time is before an end of a next MP following an MP in which the first indication information is received.

In a possible implementation, the transceiver unit that is configured to receive the first indication information, and send the first system message request to request the first system message is specifically configured to: receive the first indication information, and send the first system message request within a first time to request the first system message.

In a possible implementation, the first time is a moment of a latest available resource for sending the first system message request after the first indication information is received, the moment of the latest available resource for sending the first system message request is a moment with a shortest time interval between a moment of the resource and a moment at which the first indication information is received, the moment is a system frame number, a subframe, a slot, or a symbol of the resource, and the moment is a start moment or an end moment of the resource; or the first time is a current MP of the modification period MP in which the first indication information is received; or the first time is a moment of a latest available resource for sending the first system message request after the first indication information is received within the current MP; or the first time is a next MP following the modification period MP in which the first indication information is received; or the first time is before a time T1 of a next MP following the modification period MP in which the first indication information is received; or the first time is preset duration after the first indication information is received, or the first time is preset duration after a start time of a next MP following the modification period MP in which the first indication information is received.

In a possible implementation, the resource is a random access resource, an uplink grant resource, or an uplink resource, and the random access resource is a contention-based random access resource, a non-contention-based random access resource, or a dedicated random access resource.

In a possible implementation, the resource is the contention-based random access resource, and the transceiver unit that is configured to send the first system message request is specifically configured to: send the first system message request through a random access message 3. Alternatively, the resource is the non-contention-based random access resource, and the transceiver unit that is configured to send the first system message request is specifically configured to: send the first system message request through a random access preamble, where the random access preamble is used to request the first system message.

In a possible implementation, the transceiver unit is further configured to receive a random access response, where the random access response indicates that random access succeeds.

In a possible implementation, the transceiver unit is further configured to receive the updated first system message.

In a possible implementation, the first indication information is included in a paging message or a short message.

In a possible implementation, the first indication information is included in a short message field in DCI format 1_0.

In a possible implementation, the first system message is an SIB1.

In a possible implementation, the first system message request is an on-demand SIB1 or a WUS.

According to a sixth aspect, an embodiment of this application provides a communication apparatus. The apparatus may be a network device, or may be an apparatus in a network device (for example, a chip, a chip system, or a circuit).

For beneficial effects, refer to the descriptions of the second aspect. Details are not described herein again. The apparatus has a function of implementing behavior in the method instance of the second aspect. The function may be implemented by hardware, or may be implemented by hardware by executing corresponding software. The hardware or the software includes one or more modules corresponding to the foregoing function.

In a possible implementation, the communication apparatus may include:
a transceiver unit, configured to send first indication information to a terminal device, where the first indication information indicates a system message modification; and
the transceiver unit is further configured to send an updated first system message when a first system message request is received from the terminal device.

In a possible implementation, the transceiver unit is further configured to: not send the first system message or not page the terminal device when the first system message request from the terminal device is not received.

In a possible implementation, the transceiver unit that is configured to send the updated first system message when the first system message request is received from the terminal device is specifically configured to: send the updated first system message within a second time when the first system message request is received from the terminal device.

In a possible implementation, the second time is a next MP or a second next MP following a modification period MP of the first indication information; or the second time is a time T2 of a next MP following a modification period MP of the first indication information; or the second time is a preset time after the first system message request is received from the terminal device.

In a possible implementation, the transceiver unit that is configured to not send the first system message when the first system message request from the terminal device is not received is specifically configured to: not send the updated first system message in the next MP following the modification period MP of the first indication information when the first system message request from the terminal device is not received.

In a possible implementation, the transceiver unit that is configured to receive the first system message request from the terminal device is specifically configured to: receive the first system message request from the terminal device by using a random access resource, an uplink grant resource, or an uplink resource, where the random access resource is a contention-based random access resource, a non-contention-based random access resource, or a dedicated random access resource.

In a possible implementation, the resource is the contention-based random access resource, and the transceiver unit that is configured to receive the first system message request from the terminal device is specifically configured to: receive the first system message request through a random access message 3. Alternatively, the resource is the non-contention-based random access resource, and the transceiver unit that is configured to receive the first system message request from the terminal device is specifically configured to: receive the first system message request through a random access preamble, where the random access preamble is used to request the first system message.

In a possible implementation, the transceiver unit is further configured to send a random access response, where the random access response indicates that random access succeeds.

In a possible implementation, the first indication information is included in a paging message or a short message.

In a possible implementation, the first indication information is included in a short message field in DCI format 1_0.

In a possible implementation, the first system message is an SIB1.

In a possible implementation, the first system message request is an on-demand SIB1 or a WUS.

According to a seventh aspect, an embodiment of this application provides a communication apparatus. The communication apparatus may be a terminal device, or may be an apparatus in a terminal device (for example, a chip, a chip system, or a circuit).

For beneficial effects, refer to the descriptions of the third aspect. Details are not described herein again. The apparatus has a function of implementing behavior in the method instance of the third aspect. The function may be implemented by hardware, or may be implemented by hardware by executing corresponding software. The hardware or the software includes one or more modules corresponding to the foregoing function.

In a possible implementation, the communication apparatus may include:
a transceiver unit, configured to send first information, where the first information is used to request to determine whether a first system message is valid.

In a possible implementation, the transceiver unit that is configured to send the first information is specifically configured to: periodically send the first information.

In a possible implementation, the transceiver unit that is configured to periodically send the first information is specifically configured to: periodically send the first information within first duration, where one period is an MP of one cell, and the first duration is shorter than the MP of the cell.

In a possible implementation, the transceiver unit that is configured to send the first information is specifically configured to: send the first information by using a random access resource, an uplink grant resource, or an uplink resource, where the random access resource is a contention-based random access resource or a non-contention-based random access resource.

In a possible implementation, the resource is the contention-based random access resource, and the sending the first information includes: sending the first information through a random access message 3. Alternatively, the resource is the non-contention-based random access resource, and the sending first information includes: sending the first information through a random access preamble, where the random access preamble indicates the first information.

In a possible implementation, the transceiver unit is further configured to receive a random access response, where the random access response indicates that random access succeeds.

In a possible implementation, the first system message is an SIB1.

According to an eighth aspect, an embodiment of this application provides a communication apparatus. The apparatus may be a network device, or may be an apparatus in a network device (for example, a chip, a chip system, or a circuit).

For beneficial effects, refer to the descriptions of the fourth aspect. Details are not described herein again. The apparatus has a function of implementing behavior in the method instance of the fourth aspect. The function may be implemented by hardware, or may be implemented by hardware by executing corresponding software. The hardware or the software includes one or more modules corresponding to the foregoing function.

In a possible implementation, the communication apparatus may include:
a transceiver unit, configured to receive first information, and determine whether a first system message is valid, where the first information is used to request to determine whether the first system message is valid; and
if it is determined that the first system message is invalid, the transceiver unit is further configured to broadcast the first system message and/or send second information to a terminal device, where the second information indicates whether the first system message is valid.

In a possible implementation, the transceiver unit is further configured to: if it is determined that the first system message is valid, broadcast an acknowledgment message to the terminal device, where the acknowledgment message is used to confirm that the first system message is valid.

In a possible implementation, that the first system message is valid includes: if it is detected that related information of the first system message is the same as related information of the first system message used by the terminal device, the first system message is valid; or if it is detected that related information of the first system message is different from related information of the first system message used by the terminal device, the first system message is invalid.

In a possible implementation, the transceiver unit that is configured to receive first information is specifically configured to: receive the first information by using a random access resource, an uplink grant resource, or an uplink resource, where the random access resource is a contention-based random access resource or a non-contention-based random access resource.

In a possible implementation, the resource is the contention-based random access resource, and the transceiver unit that is configured to receive the first information is specifically configured to: receive the first information through a random access message 3. Alternatively, the resource is the non-contention-based random access resource, and the transceiver unit that is configured to receive the first information is specifically configured to: receive the first information through a random access preamble, where the random access preamble indicates the first information.

In a possible implementation, the transceiver unit is further configured to send a random access response, where the random access response indicates that random access succeeds.

In a possible implementation, the first system message is an SIB1.

According to a ninth aspect, a communication apparatus is provided. The apparatus may be a terminal device, or may be an apparatus in a terminal device (for example, a chip, a chip system, or a circuit). The apparatus may include a processor, a memory, an input interface, and an output interface. The input interface is configured to receive information from another communication apparatus other than the apparatus. The output interface is configured to output information to the another communication apparatus other than the apparatus. The processor invokes a computer program stored in the memory to perform the method for system message update provided in the first aspect or any implementation of the first aspect and the third aspect or any implementation of the third aspect.

According to a tenth aspect, a communication apparatus is provided. The apparatus may be a network device, or may be an apparatus in a network device (for example, a chip, a chip system, or a circuit). The apparatus may include a processor, a memory, an input interface, and an output interface. The input interface is configured to receive information from another communication apparatus other than the apparatus. The output interface is configured to output information to the another communication apparatus other than the apparatus. The processor invokes a computer program stored in the memory to perform the method for system message update provided in the second aspect or any implementation of the second aspect and the fourth aspect or any implementation of the fourth aspect.

According to an eleventh aspect, this application provides a communication system. The communication system includes at least one terminal device and at least one network device. The at least one terminal device and the at least one network device are run in the system to perform any one of the foregoing methods for system message update according to the first aspect, any one of the foregoing method for system message update according to the second aspect, any one of the foregoing method for system message update according to the third aspect, or any one of the foregoing method for system message update according to the fourth aspect.

According to a twelfth aspect, this application provides a computer-readable storage medium. The computer-readable storage medium stores computer instructions. When a computer program or the computer instructions are run, the method in the first aspect and any one of the possible implementations of the first aspect, the method in the second aspect and any one of the possible implementations of the second aspect, the method in the third aspect and any one of the possible implementations of the third aspect, and the method in the fourth aspect and any one of the possible implementations of the fourth aspect performed.

According to a thirteenth aspect, this application provides a computer program product including executable instructions. When the computer program product is run on a communication device, the method in the first aspect and any one of the possible implementations of the first aspect, the method in the second aspect and any one of the possible implementations of the second aspect, the method in the third aspect and any one of the possible implementations of the third aspect, and the method in the fourth aspect and any one of the possible implementations of the fourth aspect performed.

According to a fourteenth aspect, this application provides a communication apparatus. The apparatus includes a processor, and may further include a memory to implement the method in the first aspect and any one of the possible implementations of the first aspect, the method in the second aspect and any one of the possible implementations of the second aspect, the method in the third aspect and any one of the possible implementations of the third aspect, and the method in the fourth aspect and any one of the possible implementations of the fourth aspect. The apparatus may be a chip system. The chip system may include a chip, or may include a chip and another discrete component.

### BRIEF DESCRIPTION OF DRAWINGS

To describe technical solutions in embodiments of this application more clearly, the following briefly describes accompanying drawings that need to be used in the descriptions of embodiments.
FIG. 1 is a diagram of an architecture of a communication system 1000 to which an embodiment of this application is applied;
FIG. 2A is a schematic flowchart of a random access process according to an embodiment of this application;
FIG. 2B is a schematic flowchart of a random access process according to an embodiment of this application;
FIG. 2C is a diagram of an SIB1 update mechanism according to an embodiment of this application;
FIG. 2D is a diagram of a scenario in which an SIB1 is updated scenario according to an embodiment of this application;
FIG. 3 is an interaction flowchart of a method according to an embodiment of this application;
FIG. 4 to FIG. 8 are diagrams of a scenario in which a first system message is updated according to an embodiment of this application;
FIG. 9 is a diagram of a scenario in which a first system message is not updated according to an embodiment of this application;
FIG. 10 to FIG. 13 are schematic flowcharts in which a first system message is updated according to an embodiment of this application;
FIG. 14 is an interaction flowchart of another method according to an embodiment of this application;
FIG. 15A to FIG. 15D are diagrams of still another scenario in which a first system message is updated according to an embodiment of this application;
FIG. 16 to FIG. 19 are still other schematic flowcharts in which a first system message is updated according to an embodiment of this application;
FIG. 20 is a diagram of a structure of a communication apparatus according to an embodiment of this application;
FIG. 21 is a diagram of a structure of another communication apparatus according to an embodiment of this application; and
FIG. 22 is a diagram of a structure of a terminal device according to an embodiment of this application.

### DESCRIPTION OF EMBODIMENTS

Specific embodiments of this application are further described in detail below with reference to the accompanying drawings.

The terms "first", "second", and the like in the specification, the claims, and the accompanying drawings of this application are intended to distinguish between different objects, instead of describing a particular sequence. In addition, the terms "include", "have", and any variant thereof are intended to cover a non-exclusive inclusion. For example, a process, method, system, product, or device that includes a series of steps or units is not limited to the listed steps or units, but optionally further includes an unlisted step or unit, or optionally further includes another step or unit inherent to the process, method, product, or device.

An "embodiment" mentioned in this specification means that particular features, structures, or characteristics described with reference to the embodiment may be included in at least one embodiment of this application. A phrase shown at various locations in this specification may not necessarily refer to a same embodiment, nor an independent or optional embodiment exclusive from another embodiment. A person skilled in the art explicitly or implicitly understands that embodiments described in this specification may be combined with other embodiments.

In this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate three cases: only A exists, only B exists, and both A and B exist, where A and B may be singular or plural. The character "/" generally indicates an "or" relationship between the associated objects. "At least one of the following (items)" or a similar expression means any combination of these items, including a single item or any combination of a plurality of items. For example, at least one of a, b, or c may represent a, b, c, "a and b", "a and c", "b and c", or "a, b, and c", where a, b, and c may be singular or plural.

In this application, "sending information" may be understood as a device sending information to another device, or may be understood as a logical module in a device sending information to another logical module. For example, "an access network device sending information" may be understood as the access network device sending information to another device (for example, a terminal), or may be understood as a logical module 1 in the access network device sending information to a logical module 2 in the access network device.

In this application, "receiving information" may be understood as a device receiving information from another device, or may be understood as a logical module in a device receiving information from another logical module. For example, "an access network device receiving information" may be understood as the access network device receiving information from another device (for example, a terminal), or may be understood as a logical module 1 in the access network device receiving information from a logical module 2 in the access network device.

In this application, "sending information to a ... (for example, a terminal)" may be understood as a destination end of the information being the terminal, and may include directly or indirectly sending the information to the terminal. "Receiving information from a ... (for example, a terminal)" or "receiving information that is from a ... (for example, a terminal)" may be understood as a source end of the information being the terminal, and may include directly or indirectly receiving the information from the terminal. Necessary processing, such as format change, may be performed on information between the source terminal and the destination terminal for sending the information, but the destination terminal may be understood as effective information from the source terminal. Similar descriptions in this application may be understood similarly, and details are not described herein again.

To better understand embodiments of this application, the following first describes a system architecture in embodiments of this application.

Embodiments of this application are applicable to a long term evolution (long term evolution, LTE) system, a 5th generation mobile communication (5th generation mobile communication, 5G) system, or a post-5G evolved communication system such as a 6th generation mobile communication (6th generation mobile communication, 6G) system, and satellite communication and short-range wireless communication systems. The wireless communication system mentioned in embodiments of this application includes but is not limited to three major application scenarios of a 5G/6G mobile communication system: enhanced mobile broadband (enhanced mobile broadband, eMBB), ultra reliable low latency communication (ultra reliable low latency communication, URLLC), massive machine type of communication (massive machine type of communication, mMTC), a long range (long range, LoRa) system, or an Internet of Vehicles system. The wireless communication system may include one or more access network devices and one or more terminal devices.

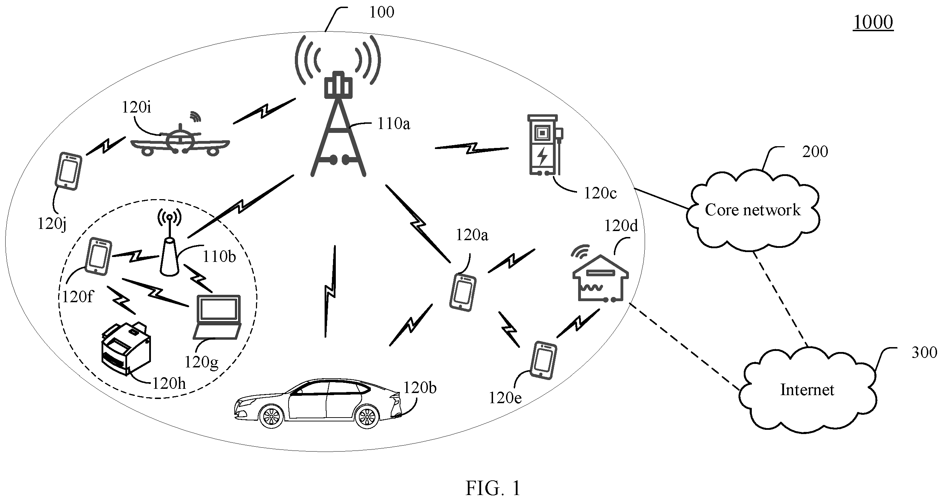

The following uses a system architecture shown in FIG. 1 as an example for description. As shown in FIG. 1, a communication system 1000 includes a radio access network (radio access network, RAN) 100, a core network (core network, CN) 200, and an Internet 300. The RAN 100 includes at least one network device (110a and 110b in FIG. 1, collectively referred to as 110) and at least one terminal (120a to 120j in FIG. 1, collectively referred to as 120). The RAN 100 may further include another RAN node, for example, a wireless relay device and/or a wireless backhaul device (not shown in FIG. 1), or the like. The terminal 120 is connected to the network device 110 in a wireless manner. Devices in the core network 200 and the Internet 300 may also be referred to as network devices. The network device in the core network 200 and the network device in the RAN 100 may be different physical devices, or may be a same physical device that integrates a logical function of the core network and a logical function of the radio access network.

It should be noted that the RAN 100 may be a cellular system related to the third generation partner program (3rd generation partnership project, 3GPP), for example, a 4G or 5G mobile communication system, or an evolved system beyond 5G (for example, a 6G mobile communication system). The RAN 100 may alternatively be an open access network (open RAN, O-RAN or ORAN), a cloud radio access network (cloud radio access network, CRAN), or the like. The RAN 100 may alternatively be a communication system in which two or more of the foregoing systems are integrated. It should be noted that a quantity of network devices and a quantity of terminal devices in FIG. 1 are merely an example, and should not be considered as a specific limitation on this application. The following further describes in detail the terminal device and the network device in the system architecture.

### I. Terminal device

The terminal device may also be referred to as user equipment (user equipment, UE), a mobile station (mobile station, MS), a mobile terminal (mobile terminal, MT), or a device configured to provide voice or data connectivity for a user, or may be an Internet of Things device. For example, the terminal device includes a handheld device, a vehicle-mounted device, or the like having a wireless connection function. Currently, the terminal device may be: a mobile phone, a tablet computer, a notebook computer, a palmtop computer, a mobile internet device (mobile internet device, MID), a wearable device (for example, a smartwatch, a smart bracelet, a pedometer, or the like), a vehicle-mounted device (for example, a car, a bicycle, an electric vehicle, an airplane, a ship, a train, a high-speed train, or the like), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, an electricity meter, or the like), an intelligent robot, a robotic arm, workshop equipment, a wireless terminal in self driving, a wireless terminal in remote medical, a wireless terminal in a smart grid (smart grid), a wireless terminal in transportation safety, a wireless terminal in a smart city, a wireless terminal in a smart home, a flight device (for example, an intelligent robot, a hot air balloon, an uncrewed aerial vehicle, an airplane), or the like. The terminal device may alternatively be another device having a terminal function. For example, the terminal device may alternatively be a device that serves a terminal function in D2D communication.

A device form of the terminal is not limited in embodiments of this application. An apparatus configured to implement a function of the terminal device may be a terminal device, or may be an apparatus that can support the terminal device to implement the function, for example, a chip system. The apparatus may be installed in the terminal device or may be used in conjunction with the terminal device. In embodiments of this application, the chip system may include a chip, or may include a chip and another discrete component.

### 2. Network device

The network device is a node in a radio access network (radio access network, RAN), and may also be referred to as a RAN node (or device). The network device is configured to help the terminal implement wireless access. A plurality of network devices in the communication system 1000 may be nodes of a same type, or may be nodes of different types. In some scenarios, roles of the network device and the terminal device are relative. For example, a network element 120i in FIG. 1 may be a helicopter or an uncrewed aerial vehicle, and the network element 120i may be configured as a mobile base station. For a terminal 120j that accesses the RAN 100 through the network element 120i, the network element 120i is a base station. However, for a network device 110a, the network element 120i is a terminal. Both the network device and the terminal device are sometimes referred to as communication apparatuses. For example, network devices 110a and 110b in FIG. 1 may be understood as communication apparatuses having a function of the base station, and network elements 120a to 120j may be understood as communication apparatuses having a function of the terminal.

In a possible scenario, the network device may be a base station (base station), an evolved NodeB (evolved NodeB, eNodeB), a transmitting and receiving point (transmitting and receiving point, TRP), a transmitting point (transmitting point, TP), a next-generation NodeB (next generation NodeB, gNB), a next-generation base station in a 6th-generation (6th generation, 6G) mobile communication system, a base station in a future mobile communication system, a satellite, an integrated access and backhaul (integrated access and backhaul, IAB) node, a network device in a non-terrestrial network (non-terrestrial network, NTN) communication system of a mobile switching center. In other words, the network device may be deployed on a high-altitude platform, a satellite, or the like. The network device may be a macro base station (110a in FIG. 1), a micro base station or an indoor station (110b in FIG. 1), a relay node or a donor node, or a radio controller in a CRAN scenario. The network device may alternatively be a device that functions as a base station in device-to-device (device to device, D2D) communication, Internet of Vehicles communication, uncrewed aerial vehicle communication, or machine communication. Optionally, the network device may alternatively be a server, a wearable device, a vehicle, a vehicle-mounted device, or the like. For example, a network device in a vehicle to everything (vehicle to everything, V2X) technology may be a road side unit (road side unit, RSU).

All or some of the functions of the network device in this application may alternatively be implemented by software functions running on hardware, or may be implemented by virtualized functions instantiated on a platform (for example, a cloud platform). The network device in this application may alternatively be a logical node, a logical module, or software that can implement all or some of the functions of the network device.

In another possible scenario, the plurality of network devices cooperate to help the terminal implement radio access, and different network devices respectively implement some functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, in a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified into a network device in an access network RAN, or the CU may be classified into a network device in a core network CN. This is not limited herein.

In different systems, the CU (or CU-CP and CU-UP), the DU, or the RU may alternatively have different names, but a person skilled in the art may understand meanings of these names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, this application uses the CU, the CU-CP, the CU-UP, the DU, and the RU as examples for description. Any unit of the CU (or the CU-CP or the CU-UP), the DU, and the RU in this application may be implemented by using a software module, a hardware module, or a combination of the software module and the hardware module.

A form of the network device is not limited in embodiments of this application. An apparatus configured to implement a function of the network device may be a network device, or may be an apparatus that can support the network device to implement the function, for example, a chip system. The apparatus may be installed in the network device or may be used in conjunction with the network device.

It should be understood that definitions of the foregoing technical terms are merely examples. For example, with continuous development of technologies, the scope of the above definitions may also change. This is not limited in embodiments of this application.

The following describes the random access process.

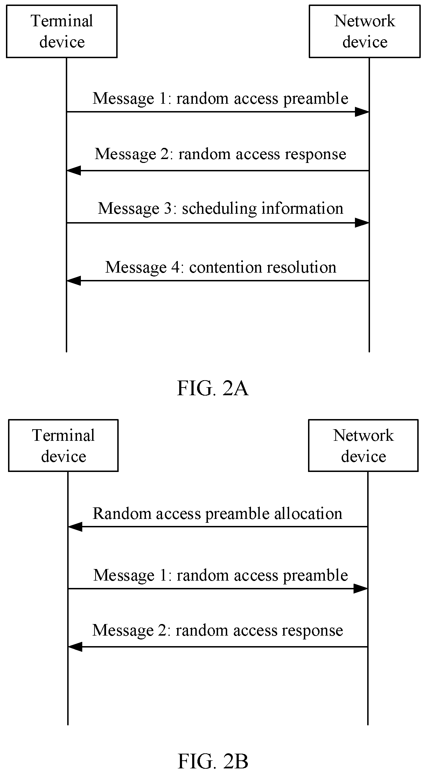

FIG. 2A is a schematic flowchart of a random access process according to an embodiment of this application. FIG. 2A shows a contention-based 4-step random access process. Specifically, after sending a message 1 including a random access preamble, a terminal device may start a random access response window to monitor a random access response. When the random access response is successfully monitored (that is, a message 2 including the random access response is received), the random access response window may be stopped, and a message 3 including scheduling information may be sent. A contention resolution window may be started when the message 3 is sent. If a message 4 including contention resolution is monitored within a time range of the contention resolution window, the random access process ends.

FIG. 2B is a schematic flowchart of another random access process according to an embodiment of this application. FIG. 2B shows a non-contention-based 4-step random access process. Specifically, a network device may allocate a non-contention-based random access preamble to the terminal device, and the terminal device performs random access through the random access preamble. In other words, after sending the message 1 including the random access preamble, the terminal device may start the random access response window to monitor the random access response. When the random access response is successfully monitored (that is, the message 2 including the random access response is received), the random access response window may be stopped, and the random access process ends.

First, to facilitate understanding of embodiments of this application, technical problems specifically to be solved by this application are further analyzed and proposed. Currently, an SIB1 is an important system information block in a 5G system. The SIB1 includes important information such as cell selection, cell configuration, and scheduling and modification of another system broadcast message. Currently, the SIB1 is periodically sent in a cell, with a sending period ranging from 20 ms to 160 ms. An occasion for sending the SIB1 may be determined by configuration parameters in MIB and downlink scheduling on a network side.

To satisfy energy saving requirements of 5G networks, the 3GPP is standardizing that the network side does not periodically send the SIB1 or does not send the SIB1, but to send a first system broadcast message request when a terminal device needs to obtain the SIB1. For example, the terminal device sends a UL-WUS to the network side, and the network side delivers an SIB1 after receiving a UL-WUS request from the terminal device. This is referred to as an OD-SIB1. The OD-SIB1 reduces sending of the SIB1 from the network side to save network power.

A cell in which the SIB1 is not periodically sent and the terminal device in an idle/inactive mode may request the SIB1 through a request of the OD-SIB1 may also be referred to as an NES cell.

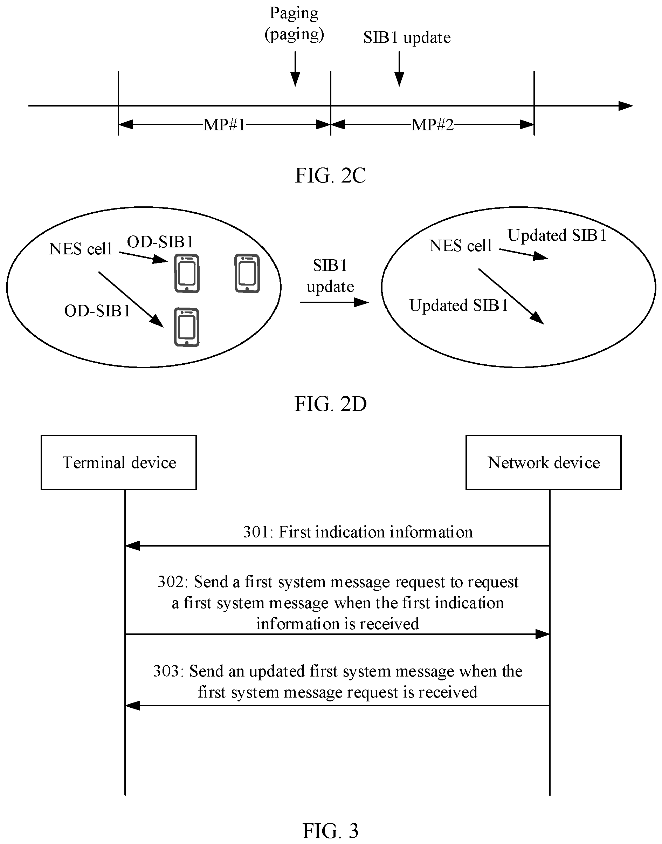

FIG. 2C is a diagram of an SIB1 update mechanism according to an embodiment of this application. As shown in FIG. 2C, the network side may deliver paging (paging) for a system message update to the terminal device in an MP (mofication period) of the cell, and deliver an updated system message in a next MP following the MP in which the paging is delivered. The NES cell does not periodically send the SIB1. However, once the SIB1 is sent, the NES cell may update the SIB1 according to a mechanism of the MP. However, as shown in FIG. 2D, in this case, there is a possible scenario: When the SIB1 is modified, if no terminal device camps on the NES cell, and the NES cell sends the updated SIB1, no terminal device receives the updated SIB1 sent by the NES cell, resulting in resource waste. Therefore, how to implement network energy saving is an urgent problem to be resolved.

The technical problem to be resolved by embodiments of this application is as follows: How to implement network energy saving when the SIB1 is modified. Based on the foregoing description, this application proposes methods for system message communication, which will be described separately through the following embodiments. It should be understood that these methods may be used in combination with each other. The technical solutions provided in this application is not limited to the process described below. Further, descriptions of a scenario in embodiments of this application are merely an example, and does not limit the solutions in embodiments of this application to be only used in the described scenario. The solutions in embodiments of this application are also applicable to a scenario with a similar problem and the like.

The terminal device in embodiments of this application (for example, the following corresponding embodiments) may be the terminal device in the network architecture shown in FIG. 1, and a function executed by the terminal device in this embodiment may alternatively be executed by an apparatus in the terminal device (for example, a chip, a chip system, or a circuit). An access network device in this embodiment may be the network device in the network architecture shown in FIG. 1, and a function executed by the network device in this embodiment may alternatively be executed by an apparatus in the access network device (for example, a chip, a chip system, or a circuit). A uniform explanation is given herein. Details are not described in this embodiment of this application again.

With reference to the foregoing network architecture, the following describes a method for system message update provided in embodiments of this application. A first cell may be an NES cell (non-anchor cell with OD-SIB1 is referred to as the NES cell, and the NES cell is a cell that sends a first system message based on a request). A first system message request may be a WUS, the first system message may be a first system information block (SIB1), and the first system message and the first system information block may be used interchangeably. It may be understood that the first cell, the first system message request, and the first system message may alternatively have other names. This is not limited in embodiments of this application.

It should be noted that the cell (cell) is described by a higher layer from a perspective of resource management, mobility management, or a service unit. Coverage of each network device may be divided into one or more cells, and the cell may be considered to include a specific quantity of frequency domain resources. The cell may be an area within coverage of a wireless network of a network device. In this embodiment of this application, different cells may correspond to different network devices, or may correspond to a same network device. In this embodiment of this application, the cell may be replaced by a network device corresponding to the cell. For example, in this embodiment of this application, a "neighboring cell" is mentioned, and the "neighboring cell" may be replaced by a network device corresponding to the neighboring cell. For example, the "neighboring cell" is replaced by a "neighboring base station" or a "neighboring network device". For another example, in this embodiment of this application, "sending by the first cell" or "sending by a second cell" may be replaced by "sending by a network device of the first cell" or "sending by a network device of the second cell". The terminal device communicating with a cell may be understood as the terminal device communicating with an access network device corresponding to the cell, or the terminal device performing communication by using communication resources of the cell. For example, the terminal device sending a message to the first cell may be understood as the terminal device sending the message to an access network device corresponding to the first cell, or the terminal device sending the message by using communication resources of the first cell.

It should be noted that, the MP in this embodiment of this application may be understood as a usage modification period. To be specific, an updated SIB1 message is broadcast in a modification period following a modification period in which an SIB1 modification indication is sent (excluding the SIB1 message used for an earthquake and tsunami warning system (earthquake and tsunami warning system, ETWS), a commercial mobile alert service (commercial mobile alert service, CMAS), positioning assistance data, and particular NTN-specific information specified in the on-site description). A modification period boundary may be defined by an SFN value for which SFN mod m=0, where m is a quantity of radio frames containing the modification period. The modification period may be configured by system information. Details are as follows:
modifationPeriodcoeff, an actual modification period, may be expressed in the quantity of radio frames:
m=modifationPeriodcoeff*defaultPagingcycly. For details, see Clause 5.2.2.2. n2 corresponds to a value 2, n4 corresponds to a value 4, and so on.

BCCH-Config::=SEQUENCE{modifationPeriodcoeff ENUMERATED{n2,n4,n8,n16}.

PagingCycle::=ENUMERATED{rf32,rf64,rf128,rf256}.

FIG. 3 is an interaction flowchart of a method according to an embodiment of this application. As shown in FIG. 3:
301: A network device sends first indication information to a terminal device.

The first indication information indicates a system message modification.

Optionally, the first indication information may be information indicating an ETWS, or information indicating a CMAS, or information indicating paging (for example, the paging shown in FIG. 2C).

The first indication information may be included in a paging message or a short message. In other words, the paging message or the short message may include a system message modification indication, an ETWS indication, a CMAS indication, or a paging indication, and is used by a network side to page the terminal device, to notify the terminal device of the system message modification. Details are as follows:
For a case in which the first indication information is included in the short message, the short message may be as follows:
The network device may send the short message to the terminal device on a physical downlink control channel (physical downlink control channel, PDCCH) by using a physical cell identifier (physical radio network temporary identifier, P-RNTI), for example, by using a short message field in DCI format 1_0 (For details, see Clause 7.3.1.2.1, TS 38.212).

The short message includes short message indication information and short message information. The short message indication information may indicate that: Only scheduling information for paging is present in the DCI (only scheduling information for paging is present in the DCI), may indicate that: Only short message is present in the DCI (only short message is present in the DCI), or may indicate that: Both scheduling information for paging and short message are present in the DCI (both scheduling information for paging and short message are present in the DCI).

For example, the following Table 1 defines the short message information.

**Table 1: Short message information**

| | |
|---|---|
| 1 | System message modification. If set to 1, this bit indicates a system message modification other than an SIB6, an SIB7, an SIB8, and a positioning system message. In addition, for a terminal device of an NES cell, the system message modification indication does not include a modification to an SIB1. |
| 2 | ETWS or CMAS indication. If set to 1, this bit indicates an ETWS primary notification, an ETWS second notification, and/or a CMAS notification. |
| 3 | Stop monitoring indication. When set to 1, this bit indicates stopping monitoring a PDCCH occasion for the paging message in this paging occasion (paging occasion, PO). |
| 4 | System message modification for extended discontinuous reception (extended discontinuous reception, eDRX). If set to 1, this bit indicates the system message modification other than the SIB6, the SIB7, the SIB8, and the positioning system message. This indication is used only when an idle state eDRX cycle configured for the terminal device is longer than a modification period of a broadcast control channel (broadcast control channel, BCCH). |
| 5 to 8 | SIB1 system message modification indication. In addition, if set to 1, this bit indicates an SIB1 system message modification. If bit 1 is set to 0, the indicated system message modification does not include the SIB1. / Reserved |

As shown in Table 1, bit 1 is the most significant bit.

The first indication information may be bit 1 or bit 2. For example, if set to 1, bit 1 may indicate the system message modification. Specifically, bit 1 may indicate the system message modification other than the SIB6, the SIB7, the SIB8, and the positioning system message. For another example, if set to 1, bit 2 may indicate the ETWS primary notification, the ETWS second notification, and/or the CMAS notification, and may further indicate the system message modification, for example, an SIB1 modification. It may be understood that if the first indication information is bit 1 or bit 2, bits 5 to 8 may be reserved (serverd) bits.

Alternatively, the first indication information may be one of bits 5 to 8, for example, may be bit 5. For example, if set to 1, bit 5 may indicate the system message modification, for example, the SIB1 modification. It may be understood that if the first indication information is one of bits 5 to 8, other bits among bits 5 to 8 other than the bit in which the first indication information is located may be reserved (serverd) bits.

When one of bits 5 to 8 (for example, bit 5) indicates the first indication information:
In a possible implementation, when bit 5 is set to 1, and bit 1 is set to 0, an explanation may be provided for bit 5: If set to 1, bit 5 may indicate the system message modification, for example, the SIB1 modification. If set to 0, bit 1 indicates no system message modification.

In another possible implementation, when bit 5 is set to 1, and bit 1 is set to 1, bit 5 indicates the SIB1 modification, and bit 1 also indicates the SIB1 modification. In this case, the SIB1 modification may be determined based on either of the two bits. Alternatively, an explanation may be provided for bit 1: If set to 1, bit 1 indicates the system message modification other than the SIB6, the SIB7, the SIB8, and the positioning system message. In addition, for the terminal device of the NES cell, the system message modification indication does not include the modification of the SIB1. In this implementation, the system message modification, for example, the SIB1 modification, may be indicated by setting bit 5 to 1, without considering redundant indication caused by bit 1 being setting to 1.

When the first indication information is included in the paging message, the paging message may further include an identifier and an access type (for example, 3GPP access and non-3GPP access) of the terminal device.

The system message may be a system message other than an SIB6, an SIB7, and an SIB8, for example, an SIB1, an SIB2, an SIB3, an SIB4, an SIB5, or an SIB9. Alternatively, the system message may be SIB1. The first indication information may indicate the system message modification in a manner of indicating a BCCH modification. In this embodiment of this application, the system message modification may also be referred to as a system message update. In other words, the system message modification and the system message update may be used interchangeably.

In a possible implementation, the network device may send the first indication information in a first MP.

It should be noted that the network device may be a network device corresponding to a first cell, and the network device and the first cell may be used interchangeably.

302: When receiving the first indication information, the terminal device sends a first system message request to request a first system message.

When receiving the first indication information from the network device, the terminal device may send the first system message request to the network device to request the first system message. In other words, the terminal device may send the first system message request, to request the network side to update the first system message. The network device updating the first system message may be understood as the network device sending an updated first system message to the terminal device.

Optionally, after receiving the first indication information, the terminal device may determine whether to store a valid first system message. If the terminal device stores the valid first system message, the terminal device may not need to send the first system message request. Alternatively, if the terminal device does not store the valid first system message, the terminal device sends the first system message request.

Further, optionally, when receiving the first indication information, the terminal device may detect the first system message. If the terminal device detects the first system message, the terminal device may not need to send the first system message request. Alternatively, if the terminal device does not detect the first system message, the terminal device sends the first system message request. Detecting the first system message may be referred to as receiving the first system message, receiving and decoding the first system message, or determining to store the valid first system message. The terminal device detecting the first system message includes the terminal detecting the updated first system message. The valid first system message may be understood as the updated first system message.

An implementation in which the terminal device detects the first system message may be as follows:
The terminal device may perform detection based on related information of the first system message. If stored related information of the first system message is the same as the detected related information of the first system message, it is determined that the first system message is not detected. Alternatively, if stored related information of the first system message is different from the detected related information of the first system message, it is determined that the first system message is detected. In this case, the terminal device may store the first system message of latest related information. The related information of the first system message may include a version number of the first system message, content information included in the first system message, and the like. The content information included in the first system message may include, for example, cell reselection information, cell selection information, information about a neighboring cell, access control information, and the like.

Optionally, that the terminal device detects the first system message may be understood as: When the terminal device receives the first indication information, it is considered that the first system message is the updated first system message provided that the first system message is received. Therefore, the terminal device does not need to send the first system message request provided that the terminal device determines that the first system message is received. If the terminal device does not detect the first system message, the terminal device needs to send the first system message request.

Optionally, that the terminal device detects the first system message may be understood as that the terminal device detects the first system message within a preset time after receiving the first indication information. The preset time may be a time from receiving the first indication information to sending the first system message request. A time of sending the first system message request is a moment of a resource for sending the first system message request. The resource may be a random access resource, an uplink grant resource, or an uplink resource. The moment or the time may be a system frame number, a subframe, a lot, or a symbol of the resource. The moment may be a start moment or an end moment of the resource. For example, the start moment is the first symbol of the resource, and the end moment is the last symbol of the resource. The preset time may alternatively be predefined or preconfigured duration. For example, a timer is defined. The timer is started when the first indication information is received, and the first system message is detected within running duration of the timer. If the first system message is detected before the timer expires, the first system message request is not sent. Alternatively, if the first system message is not detected when the timer expires, the first system message request needs to be sent. It may be understood that the preset time may further include the following first time. In other words, before sending the first system message request, the terminal device may detect whether there is an updated first system message. In a possible implementation, that the preset time may be before an end of a next MP following an MP in which the terminal device receives the first indication information may be understood as that the preset time may be a current MP in which the terminal device receives the first indication information, or the preset time may be before a next MP following the current MP.

An implementation in which the terminal device sends the first system message request may be any one or more of the following:
In a first possible implementation, when receiving the first indication information, the terminal device sends the first system message request to request the first system message. In other words, after receiving the first indication information, the terminal device may immediately send the first system message request to request the first system message. Optionally, the terminal device may send the first system message request one or more times. For example, the terminal device needs to send the first system message request N times, and the terminal device does not send the first system message request any more when a quantity of times the first system message request is sent is greater than N, where N is an integer greater than or equal to 1.

In a second possible implementation, the terminal device sends the first system message request on a latest available resource for sending the first system message request after the first indication information is received. The latest available resource for sending the first system message request may be a resource with a shortest interval between a time of the resource and a time at which the first indication information is received. The time of the resource may be a start time or an end time. For example, there are three resources for sending the first system message request. A start time of the resource 1 is Tₐ, a start time of the resource 2 is T_{b}, a start time of the resource 3 is T_{c}, and a time at which the first indication information is received is T_{d}, with time intervals between Tₐ, T_{b}, T_{c}, and T_{d} being respectively 1 ms, 1.2 ms, and 1.4 ms. In this case, the terminal device may select the resource 1 for sending the first system message request.

In a third possible implementation, the network device may send the first indication information in a first MP. After receiving the first indication information in the first MP, the terminal device may send the first system message request in the first MP. Alternatively, the terminal device may send the first system message request on the latest available resource for sending the first system message request after the first indication information is received in the first MP. If the resource available for the terminal device to send the first system message request is later than an end time of the first MP, the terminal device does not send the first system message request. In this case, the network side may receive the first system message request at the first MP, and send the first system message to the terminal device as soon as possible at a next MP following the first MP.

In a fourth possible implementation, the network device may send the first indication information in the first MP. After receiving the first indication information in the first MP, the terminal device may send the first system message request in a next MP following the first MP.

In a fifth possible implementation, the network device may send the first indication information in the first MP. After receiving the first indication information in the first MP, the terminal device may send the first system message request before a time T1 of a next MP following the first MP.

In a sixth possible implementation, the terminal device sends the first system message request within preset duration after the first indication information is received, or preset duration after a start time of a next MP following the first MP. For example, the start time of the next MP is Ts, the terminal device sends the first system message request within an interval from Ts to Ts + preset duration ([Ts, Ts + preset duration]).

In a seventh possible implementation, the terminal device may send the first system message request by using a random access resource, where the random access resource may be a contention-based random access resource, a non-contention-based random access resource, or a dedicated random access resource. The contention-based random access resource may send the first system message request through a contention-based random access process. That is, the first system message request may be sent in a random access message 3 (for example, the message 3 shown in FIG. 2A). The non-contention-based random access resource or the dedicated random access resource is an allocated resource dedicated to sending the first system message request. That is, a random access preamble corresponds to the first system message request, and the terminal device sends the random access preamble to indicate the first system message request.

Optionally, in an eighth possible implementation, in a case in which the network device corresponds to a plurality of terminal devices, if a first terminal device has sent the first system message request and the network device receives the first system message request sent by the first terminal device, the network device broadcasts the updated first system message to the plurality of terminal devices. A second terminal device may detect the updated first system message before sending the first system message request. If the updated first system message is detected, the second terminal device may not send the first system message request, thereby reducing signaling overheads.

303: The network device sends the updated first system message when the first system message request is received.

Optionally, if the network device does not receive the first system message request, the network device does not send the updated first system message. Further, when the network device sends the first indication information (for example, the first indication information is included in the paging message) to the terminal device, if the first system message request of the terminal device is not received, the network device does not maintain the paging message, and does not send the paging message at a configured paging occasion. The network device sends the updated first system message until the network device receives the first system message request sent by the terminal device.

An implementation in which the network device sends the updated first system message may be any one or more of the following:
In a first possible implementation, the network device may send the first indication information in a first MP, and send the updated first system message in a next MP following the first MP.
In a second possible implementation, the network device may send the first indication information in the first MP, receive the first system message request from the terminal device in the first MP, and send the updated first system message within a time T2 of the next MP following the first MP.
In a third possible implementation, the network device may send the first indication information in a first MP, receive the first system message request from the terminal device in a next MP following the first MP, and send the updated first system message in a second next MP following the first MP.
In a fourth possible implementation, the network device sends the updated first system message within a preset time after the first system message request is received. For example, a time at which the first system message request is received is Te. In this case, a start time of the preset time is an end time of Te. For example, the network device sends the updated first system message within a period of time from Te to Te + preset time ([Te, Te + preset time]).
In a fifth possible implementation, if the terminal device sends the first system message request by using the random access resource, and after the terminal device sends the random access preamble, the random access preamble indicates the first system message request, the network device directly sends the first system message without sending a random access response (random access response, RAR). The terminal device does not expect to receive an RAR after sending the first system message request or indicating, through a preamble, the first system message request. Therefore, the terminal device may send the first system message request one or more times, that is, send the random access preamble one or more times. For example, the terminal device sends the first system message request N times. When a quantity of times the first system message request is sent reaches N times, the current random access process ends.
In a sixth possible implementation, if the terminal device sends the first system message request by using the random access resource, the terminal device sends the first system message request through a random access message 3, and the network device directly sends the first system message. The terminal device indicates, through the message 3, that the terminal device does not expect to receive a response (message 4) after the first system message request is received. Therefore, the terminal device may send the first system message request one or more times, that is, send the message 3 one or more times. For example, the terminal device sends the first system message request N times. When a quantity of times the first information is sent reaches N times, the current random access process ends.
In a seventh possible implementation, if the terminal device sends the first system message request by using the random access resource, after the terminal device sends the random access preamble, the random access preamble indicates the first system message request, and the network device sends an RAR, and the RAR indicates that random access succeeds. The terminal device receives the first system message when the RAR is received. Optionally, the terminal device determines, in a period of time, whether the RAR is received, where the period of time is an RAR receiving window. The terminal device sends the first system message request one or more times, that is, sends the random access preamble one or more times. For example, the terminal device sends the first system message request indication N times. After a quantity of times the first system message request is sent reaches N times, the RAR receiving window is opened after the first system message request is sent N times, and the current random access process ends.
In an eighth possible implementation, if the terminal device sends the first system message request by using the random access resource, the terminal device sends the first system message request through the random access message 3, and the network device sends a random access message 4. In addition, the terminal device receives the first system message when the message 4 is received. Optionally, the terminal device determines, in a time period 1 (for example, a random access response window), whether the RAR is received, and determines, in a time period 2 (for example, a contention resolution window), whether the message 4 is received. The terminal device sends the first system message request one or more times, that is, sends the message 3 one or more times. For example, the terminal device sends the first system message request N times. When a quantity of times the first system message request is sent reaches N times, the current random access process ends.

In this embodiment of this application, the network side may deliver, to the terminal device, indication information (for example, the first indication information) indicating the system message update. Different from a conventional technology in which the network side continues to deliver the updated first system message after the indication information is delivered, in this embodiment of this application, after delivering the indication information, the network device sends the updated first system message after the first system message request is received from the terminal device. In other words, when the first system message is modified, the terminal device needs to actively request the first system message. This avoids resource waste caused by the network side sending the updated first system message but no terminal device receiving the updated first system message, thereby allowing for network energy saving when the first system message is modified.

With reference to the method flowchart shown in FIG. 3, several possible embodiments are specifically described in the following:

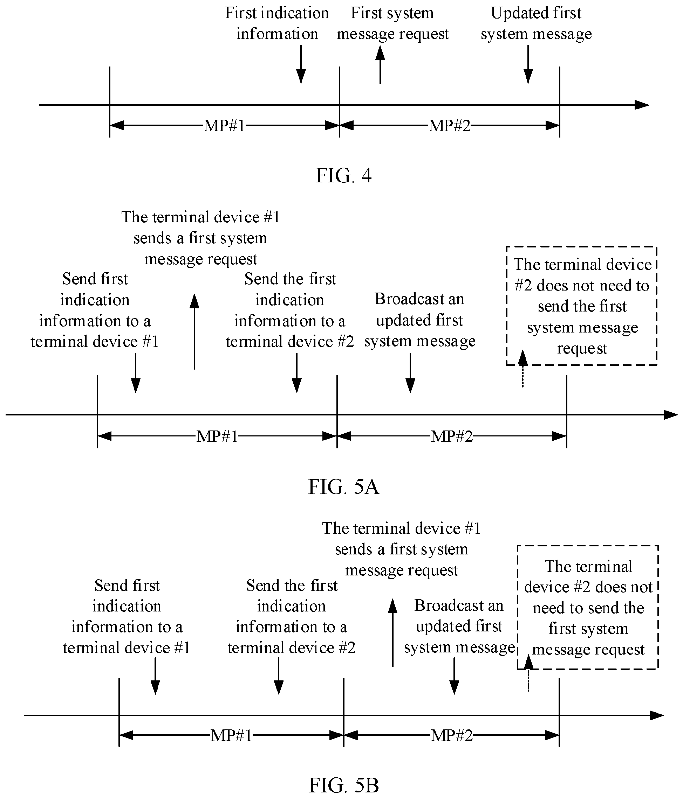

Embodiment 1: FIG. 4 is a diagram of a scenario of a first system message update according to an embodiment of this application. As shown in FIG. 4:
1. A network device corresponding to a first cell indicates, in an MP#1, a first system message modification to a terminal device through first indication information.
2. After receiving the first indication information, the terminal device sends a first system message request in an MP#2, to request the network device to send a first system message of the first cell. For example, an OD-SIB1 may be sent through WUS configuration to request the first system message. Optionally, after receiving the first indication information, the terminal device may send the first system message request at a nearest physical random access channel (physical random access channel, PRACH) occasion.
3. After receiving the first system message request, the network device corresponding to the first cell sends an updated first system message to the terminal device in an MP#2.

Embodiment 2: FIG. 5A to FIG. 5C are diagrams of another scenario in which a first system message is updated according to an embodiment of this application. A network device corresponding to a first cell corresponds to a plurality of terminal devices, and the network device sends first indication information to one or more of the terminal devices to indicate a first system message modification. After receiving the first indication information, the one or more terminal devices may first detect whether an updated first system message exists. If no updated first system message is detected, the first system message request may be sent to the network device. After receiving the first system message request sent by a terminal device, the network device may broadcast the updated first system message. The network device has delivered the updated first system message, and the updated first system message can be detected before the first system message request is sent. Therefore, another terminal device that has not sent the first system message request may not need to send the first system message request to the network device, thereby reducing signaling overheads.

After receiving the first indication information, the one or more terminal devices may first detect whether the updated first system message exists. If no updated first system message is detected, the one or more terminal devices may send the first system message request to the network device. An occasion for sending the first system message request to the network device may be to send the first system message request on a latest available resource for sending the first system message request after the first indication information is received. The latest available resource for sending the first system message request may be a resource with a shortest interval between a time of the resource and a time at which the first indication information is received. The time of the resource may be a start time or an end time. For example, for a terminal device #1, there are three resources for sending the first system message request. A start time of the resource 1 is Tₐ, a start time of the resource 2 is T_{b}, a start time of the resource 3 is T_{c}, and a time at which the first indication information is received is T_{d}, with time intervals between Tₐ, T_{b}, T_{c}, and T_{d} being respectively 1 ms, 1.2 ms, and 1.4 ms. In this case, the terminal device #1 may select the resource 1 for sending the first system message request.

As shown in FIG. 5A to FIG. 5C:
1. The network device corresponding to the first cell corresponds to a plurality of terminal devices, for example, the terminal device #1 and a terminal device #2. The network device may indicate the first system message modification to the terminal device #1 in an MP#1 through the first indication information. Alternatively, the network device may indicate the first system message modification to the terminal device #2 in an MP#1 through the first indication information.
2. After receiving the first indication information, the terminal device #1 and the terminal device #2 may detect whether the updated first system message exists. If no updated first system message is detected, the terminal device #1 and the terminal device #2 may send the first system message request on a latest available resource for sending the first system message request.

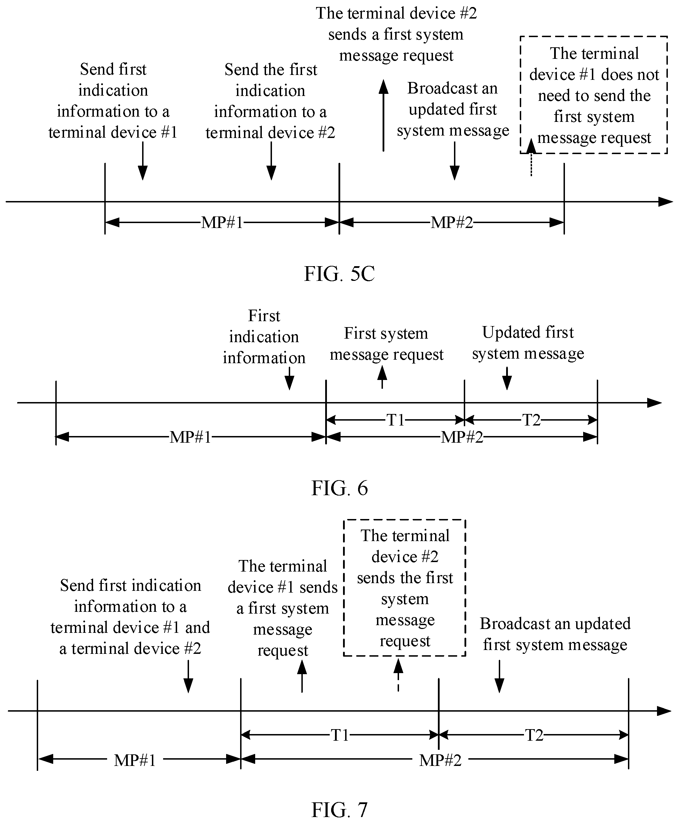

For example, as shown FIG. 5A, the terminal device #1 may send the first system message request to the network device in the MP#1, to request the network device to send the first system message of the first cell. The terminal device #2 may send the first system message request to the network device in the MP#2. It can be learned that: The terminal device #1 first sends the first system message request to the network device. Because the terminal device #1 has sent the first system message request, the terminal device #2 receives the updated first system message broadcast by a network before the terminal device #2 sends the first system message request. Therefore, before sending the first system message request, the terminal device #2 may detect the updated first system message, so that the terminal device #2 does not need to send the first system message. For another example, as shown in FIG. 5B, the terminal device #1 may send the first system message request to the network device in the MP#2, to request the network device to send the first system message of the first cell. The terminal device #2 may send the first system message request to the network device in the MP#2. It can be learned that: The terminal device #1 first sends the first system message request to the network device. Because the terminal device #1 has sent the first system message request, the terminal device #2 receives the updated first system message broadcast by a network before the terminal device #2 sends the first system message request. Therefore, before sending the first system message request, the terminal device #2 may detect the updated first system message, so that the terminal device #2 does not need to send the first system message. Optionally, for example, as shown in FIG. 5C, the terminal device #1 may send the first system message request to the network device in the MP#2, to request the network device to send the first system message of the first cell. The terminal device #2 may send the first system message request to the network device in the MP#2. However, a resource for the terminal device #2 to send the first system message request is before a resource for the terminal device #2 to send the first system message request. Therefore, it can be learned that: The terminal device #2 first sends the first system message request to the network device. Because the terminal device #2 has sent the first system message request, the terminal device #1 receives the updated first system message broadcast by a network before the terminal device #1 sends the first system message request. Therefore, before sending the first system message request, the terminal device #1 may detect the updated first system message, so that the terminal device #1 does not need to send the first system message.

It can be learned from FIG. 5A to FIG. 5C that which of the terminal device #1 and the terminal device #2 first sends the first system message request is related to the latest available resource for sending the first system message request after the terminal device receives the first indication information.

3. According to FIG. 5A and FIG. 5B, after receiving the first system message request from the terminal device #1, the network device corresponding to the first cell broadcasts the updated first system message to the plurality of terminal devices in the MP#2. However, for the terminal device #2, because the network device has delivered the updated first system message, the terminal device #2 can detect the updated first system message before the first system message request is sent. Therefore, the terminal device #2 may not need to send the first system message request to the network device. Optionally, according to FIG. 5C, after receiving the first system message request from the terminal device #2, the network device corresponding to the first cell broadcasts the updated first system message to the plurality of terminal devices in the MP#2. However, for the terminal device #1, because the network device has delivered the updated first system message, the terminal device #1 can detect the updated first system message before the first system message request is sent. Therefore, the terminal device #1 may not need to send the first system message request to the network device.

Embodiment 3: FIG. 6 is a diagram of still another scenario in which a first system message is updated according to an embodiment of this application. As shown in FIG. 6:
1. A network device corresponding to a first cell indicates, in an MP#1, a first system message modification to a terminal device through first indication information.
2. After receiving the first indication information, the terminal device sends a first system message request within a time T1 of an MP#2, to request the network device to send a first system message of the first cell.
3. After receiving the first system message request, the network device corresponding to the first cell sends an updated first system message to the terminal device within a time T2 of an MP#2.

Embodiment 4: FIG. 7 is a diagram of still another scenario in which a first system message is updated according to an embodiment of this application. As shown in FIG. 7:
1. A network device corresponding to a first cell corresponds to a plurality of terminal devices, for example, a terminal device #1 and a terminal device #2. The network device may indicate, in an MP#1, a first system message modification to the terminal device #1 and the terminal device #2 through first indication information.
2. After receiving the first indication information, the terminal device #1 sends a first system message request to the network device within a time T1 of an MP#2, to request the network device to send a first system message of the first cell. Optionally, after receiving the first indication information, the terminal device #2 may also send the first system message request to the network device within the time T1 of the MP#2, to request the network device to send the first system message of the first cell.
3. After receiving the first system message request from the terminal device #1, the network device corresponding to the first cell broadcasts an updated first system message within the time T2 of the MP#2. The terminal device #1 may detect the updated first system message, that is, receive the updated first system message from the network device. Optionally, the terminal device #2 may also detect the updated first system message, that is, receive the updated first system message from the network device. Because the network device broadcasts the updated first system message, the terminal device #2 may also detect the updated first system message. Therefore, the terminal device #2 may not need to send the first system message request to the network device.

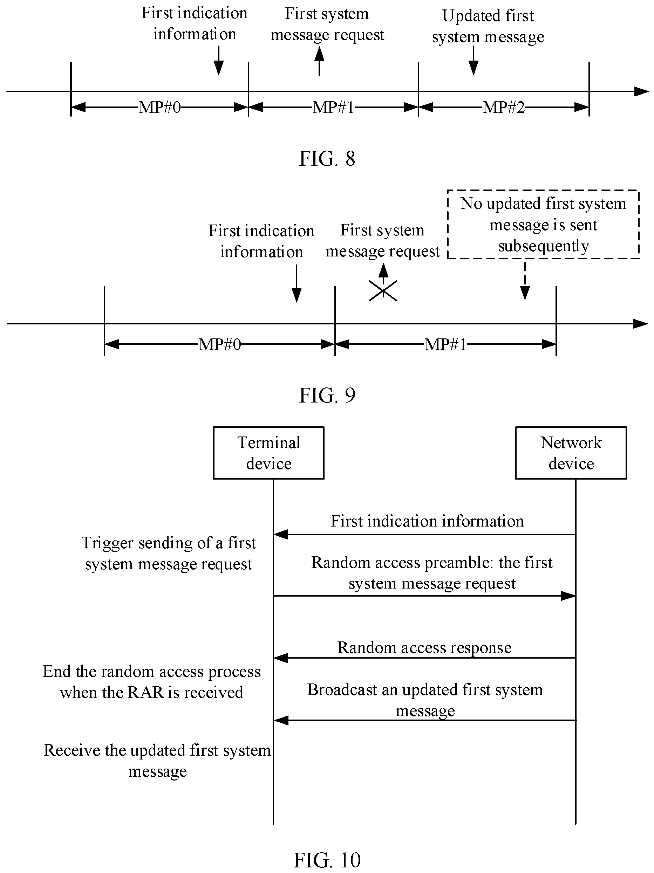

Embodiment 5: FIG. 8 is a diagram of still another scenario in which a first system message is updated according to an embodiment of this application. As shown in FIG. 8:
1. A network device corresponding to a first cell indicates, in an MP#0, a first system message modification to a terminal device through first indication information.
2. After receiving the first indication information, the terminal device sends a first system message request in an MP#1, to request the network device to send a first system message of the first cell.
3. After receiving the first system message request, the network device corresponding to the first cell sends an updated first system message to the terminal device in an MP#2.

Embodiment 6: FIG. 9 is a diagram of a scenario in which a first system message is not updated according to an embodiment of this application. As shown in FIG. 9:
1. A network device corresponding to a first cell indicates, in an MP#0, a first system message modification to a terminal device through first indication information.
2. If the network device does not receive a first system message request from the terminal device, the network device does not send an updated first system message in an MP#1.

FIG. 10 to FIG. 13 are schematic flowcharts in which a first system message is updated according to an embodiment of this application. The terminal device may send the first system message request by using a random access resource, where the random access resource may be a non-contention-based random access resource or a contention-based random access resource.

Embodiment 7: As shown in FIG. 10, the terminal device may send the first system message request by using the non-contention-based random access resource. Details are as follows:
1. A network device may send first indication information to the terminal device for a first system message modification.
2. After receiving the first indication information, the terminal device triggers sending of the first system message request. Specifically, the terminal device may send a random access preamble to the network device, where the random access preamble indicates the first system message request.
3. The network device sends an RAR to the terminal device, and the terminal device ends the random access process when the RAR is received.
4. The network device may broadcast an updated first system message, and the terminal device detects the updated first system message, that is, may receive the updated first system message from the network device.

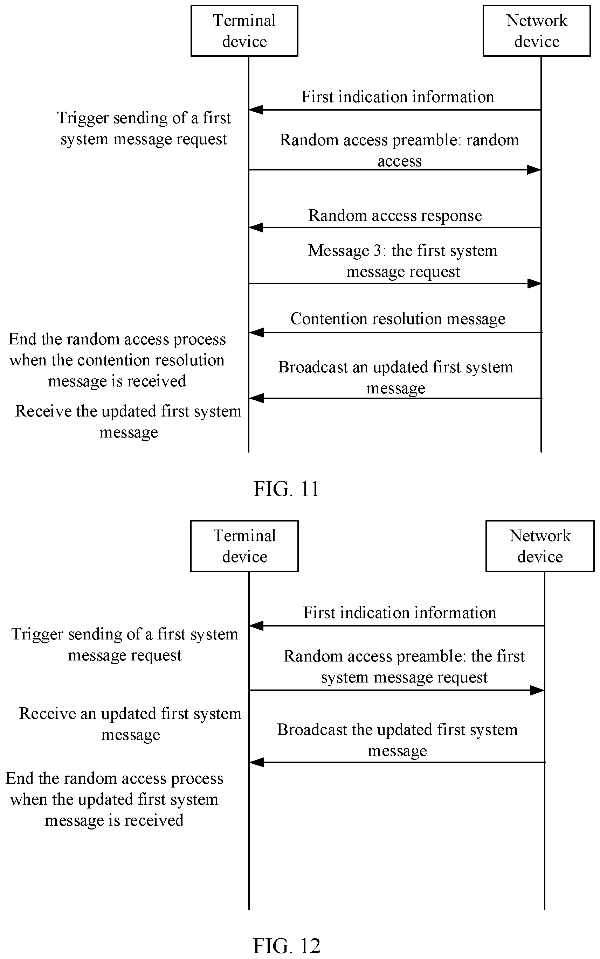

Embodiment 8: As shown in FIG. 11, the terminal device may send the first system message request by using the contention-based random access resource. Details are as follows:
1. A network device may send first indication information to the terminal device to indicate a first system message modification.
2. After receiving the first indication information, the terminal device triggers sending of the first system message request. Specifically, the terminal device may send a random access preamble to the network device, where the random access preamble is used for random access, or may be understood as being used for uplink synchronization.
3. The network device sends an RAR to the terminal device.
4. The terminal device sends the first system message request to the network device through a random access message 3.
5. The network device sends a contention resolution message to the terminal device, and the terminal device ends the random access process when the contention resolution message is received.
6. The network device may broadcast an updated first system message, and the terminal device detects the updated first system message, that is, may receive the updated first system message from the network device.

Embodiment 9: As shown in FIG. 12, the terminal device may send the first system message request by using the non-contention-based random access resource. Details are as follows:
1. A network device may send first indication information to the terminal device to indicate a first system message modification.
2. After receiving the first indication information, the terminal device triggers sending of the first system message request. Specifically, the terminal device may send a random access preamble to the network device, where the random access preamble indicates the first system message request.
3. The terminal device detects an updated first system message. The network device broadcasts the updated first system message, and the terminal device ends the random access process when the updated first system message is received. Alternatively, optionally, the terminal device may send the first system message request one or more times through the random access preamble. After the first system message request is sent a specific quantity of times, the terminal device may end the random access process.

It should be noted that, compared with FIG. 10, in FIG. 12, the network device may directly broadcast the updated first system message without sending the RAR. After sending the first system message request through the random access preamble, the terminal device does not expect to receive the RAR. Therefore, after sending the random access preamble, the terminal device may start to detect the updated first system message. In addition, a manner in which the random access process ends in FIG. 10 and FIG. 12 differs. In FIG. 10, the random access process ends when the terminal device receives the RAR. In FIG. 12, the random access process ends when the terminal device receives the updated first system message, or after the terminal device sends the first system message request through the random access preamble.

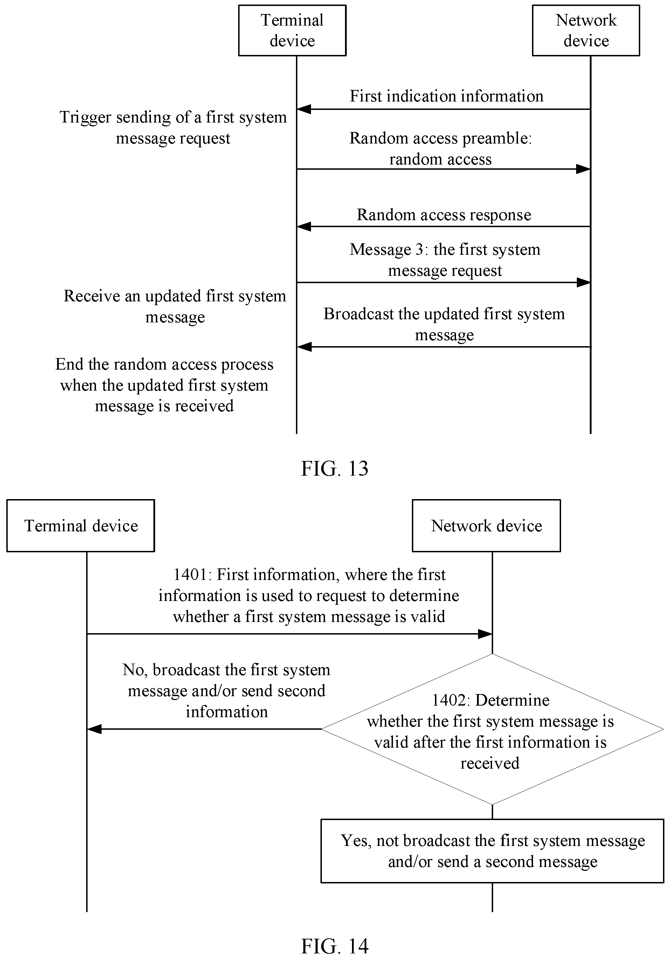

Embodiment 10: As shown in FIG. 13, the terminal device may send the first system message request by using the contention-based random access resource. Details are as follows:
1. A network device may send first indication information to the terminal device to indicate a first system message modification.
2. After receiving the first indication information, the terminal device triggers sending of the first system message request. Specifically, the terminal device may send a random access preamble to the network device, where the random access preamble is used for random access, or may be understood as being used for uplink synchronization.
3. The network device sends an RAR to the terminal device.
4. The terminal device sends the first system message request to the network device through a random access message 3. After sending the message 3, the terminal device may detect the updated first system message.
5. The network device may broadcast the updated first system message. The terminal device ends the random access process when the updated first system message is received. Alternatively, optionally, the terminal device may send the first system message request one or more times through the message 3. After the first system message request is sent a specific quantity of times, the terminal device may end the random access process.

It should be noted that, compared with FIG. 11, in FIG. 13, the network device may directly broadcast the updated first system message without sending a contention resolution message. After sending the first system message request through the message 3, the terminal device does not expect to receive the contention resolution message. Therefore, after sending the message 3, the terminal device may start to detect the updated first system message. In addition, a manner in which the random access process ends in FIG. 11 and FIG. 13 differs. In FIG. 11, the random access process ends when the terminal device receives the contention resolution message. In FIG. 13, the random access process ends when the terminal device receives the updated first system message, or after the terminal device sends the first system message request through the message 3.

FIG. 14 is an interaction flowchart of another method according to an embodiment of this application. As shown in FIG. 14:
1401: A terminal device sends first information to a network device, where the first information is used to request to determine whether a first system message is valid.

In a possible implementation, the terminal device sends the first information one or more times.

An implementation in which the terminal device sends the first information may be any one or more of the following:
In a first possible implementation, the terminal device may periodically send the first information. To be specific, after receiving the first system message, the terminal device starts to periodically send the first information, that is, send the first information at intervals of a first period. A time for sending the first information may be determined based on the first period and a next system frame number (a first system frame number) following a system frame number for receiving the first system message, and the first information is sent at intervals of the first period starting from the first system frame number. For example, the first information is sent, starting from a first subframe of the first system frame number, at intervals of duration corresponding to the first period. If the first subframe of the first system frame number is 50, and the first period is 80 ms, a subframe number for sending the first information may be 130, 210, 290, ..., and the subframe number may further include the subframe number 50.
In a second possible implementation, the terminal device may periodically send the first information within first duration. To be specific, the terminal device may determine the first duration based on the first period, and send the first information one or more times within each first duration. For example, one period is an MP of one cell, and the first duration is shorter than the MP of the cell. For another example, starting from the first subframe 50 with the first period of 80 ms, the first information may be sent in the first duration between the subframe 50 and the subframe 130, and the first information may be sent in the first duration between the subframe 130 and the subframe 210.
In a third possible implementation, the terminal device sends the first information by using a random access resource, where the random access resource is a contention-based random access resource or a non-contention-based random access resource. When the non-contention-based random access resource is used, the first information may be sent based on a correspondence between a random access preamble and the first information. In other words, a first preamble is used to send the first information, and the terminal device sends the first preamble to indicate the first information.
In a fourth possible implementation, the terminal device sends the first information by using an uplink grant, and the uplink grant is configured based on the foregoing first period. To be specific, if the first subframe of the first system frame number is 50, and the first period is 80 ms, a subframe number for sending the first information may be 130, 210, 290, ..., and the subframe number may further include the subframe number 50. In this case, the uplink grant exists at a time when the subframe number is 50, 130, 210, and 290, so that the terminal device sends the first information.

It should be noted that at least one of the foregoing random access resource, the uplink grant, and the first period may be configured by the network device.

1402: After receiving the first information, the network device determines whether the first system message is valid; if the first system message is not valid, the network device broadcasts the first system message and/or sends second information to the terminal device; or if the first system message is valid, the network device does not broadcast the first system message and/or send the second information.

After receiving the first information, the network device may determine whether the first system message is valid (that is, whether the first system message is modified). If the first system message is modified, the network device determines that the first system message is invalid, and may broadcast the first system message and/or send the second information to the terminal device. If the first system message is not modified, the network device determines that the first system message is valid, and may not broadcast the first system message and/or send the second information to the terminal device. The second information indicates whether the first system message is valid.

Further, optionally, the terminal device may wait to receive the first system message and/or the second information from the network device within a preset time. If the terminal device receives the first system message and/or the second information within the preset time, it is determined that the first system message is modified. If the terminal device does not receive the first system message and/or the second information within the preset time, it is determined that the first system message is valid, and the first system message may continue to be used.

Optionally, if determining that the first system message is valid, the network device may broadcast an acknowledgment message to the terminal device, where the acknowledgment message is used to confirm that the first system message is valid.

An implementation in which the network device broadcasts the first system message and/or sends the second information to the terminal device may be any one or more of the following:
In a first possible implementation, if the terminal device sends the first information by using the random access resource, after the terminal device sends the random access preamble, where the random access preamble indicates the first information, the network device directly broadcasts the first system message and/or sends the second information without sending an RAR. After sending the first information or indicating the first information through the random access preamble, the terminal device does not expect to receive the RAR. Therefore, the terminal device may send the first information one or more times, that is, the terminal device sends the random access preamble one or more times. For example, the terminal device sends the first information N times. When a quantity of times the first information is sent reaches N times, the current random access process ends.

In a second possible implementation, if the terminal device sends the first information by using the random access resource, the terminal device sends a random access message 3, where the message 3 indicates the first information. The network device does not send a contention resolution message, and after receiving the message 3, the network device directly broadcasts the first system message and/or sends the second information. After indicating the first information through the random access message 3, the terminal device does not expect to receive the RAR. Therefore, the terminal device may send the first information one or more times, that is, the terminal device sends the message 3 one or more times. For example, the terminal device sends the first information N times. When a quantity of times the first information is sent reaches N, the current random access process ends.

In a third possible implementation, if the terminal device sends the first information by using the random access resource, after the terminal device sends the random access preamble, where the random access preamble indicates the first information, the network device sends the RAR, where the RAR includes the first system message and/or the second information. In an implementation, the RAR includes the second information, and the second information indicates whether the first system message is valid. When the first system message is invalid, the terminal device further receives the first system message. Optionally, the terminal device may determine, within a period of time, whether the second information is received. The terminal device sends the first information one or more times, that is, the terminal device sends the random access preamble one or more times. For example, the terminal device sends the first information N times. When a quantity of times the first information is sent reaches N times, the current random access process ends.

In a fourth possible implementation, if the terminal device sends the first information by using the random access resource, the terminal device sends a random access message 3, where the message 3 indicates the first information, and the network device sends the RAR. For example, the terminal device sends the random access message 3, where the message 3 may include the first information. The network device sends a random access message 4, where the message 4 may include the second information, and the second information indicates whether the first system message is valid. When the first system message is invalid, the terminal device further receives the first system message. Optionally, the terminal device may determine, within a period of time, whether the second information is received. The terminal device sends the first information one or more times, that is, the terminal device sends the message 3 one or more times. For example, the terminal device sends the first information N times. When a quantity of times the first information is sent reaches N times, the current random access process ends.

In a fifth possible implementation, if the terminal device sends the first information by using the random access resource, after the terminal device sends the random access preamble, the first system message is modified, and the network device sends the RAR, where the RAR includes the second information, and the second information indicates that the first system message is invalid. In addition, the terminal device continues to receive the first system message, where the first system message is an updated system message. If the first system message is not modified, the second information is not sent. If the terminal device does not receive the second information within a period of time, it is considered that the first system message is valid. The terminal device sends the first information one or more times, that is, the terminal device sends the random access preamble one or more times. For example, the terminal device sends the first information N times. When a quantity of times the first information is sent reaches N times, the current random access process ends.

In a sixth possible implementation, if the terminal device sends the first information by using the random access resource, the terminal device sends a random access message 3, where the message 3 indicates the first information, and the network device sends the RAR. For example, the terminal device sends the random access message 3, where the message 3 may include the first information, and the first system message is modified. The network device sends a random access message 4, where the message 4 may include the second information, and the second information indicates that the first system message is invalid. In addition, the terminal device continues to receive the first system message, where the first system message is an updated system message. If the first system message is not modified, the second information is not sent. If the terminal device does not receive the second information within a period of time, it is considered that the first system message is valid. The terminal device sends the first information one or more times, that is, the terminal device sends the message 3 one or more times. For example, the terminal device sends the first information N times. When a quantity of times the first information is sent reaches N times, the current random access process ends.

A difference between the flowcharts of embodiments in FIG. 3 and FIG. 14 lies in: For FIG. 3, the network device may actively page the terminal device due to the system message modification. However, for FIG. 14, the network device does not need to indicate the first system message modification through the first indication information, but the terminal device actively confirms, from the network device, whether the first system message is valid.

In this embodiment of this application, the terminal device may actively send the first information to the network device to request whether the first system message is valid. The network device determines whether the first system message is valid, and sends the updated first system message to the terminal device when the first system message is invalid. This avoids resource waste caused by the network side sending the updated first system message but no terminal device receiving the updated first system message, thereby allowing for network energy saving when the first system message is modified.

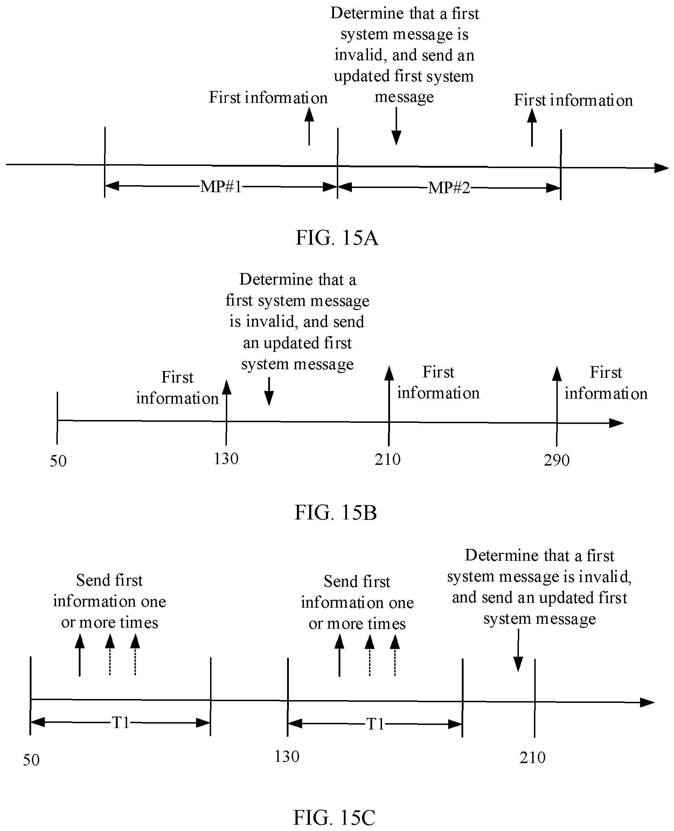

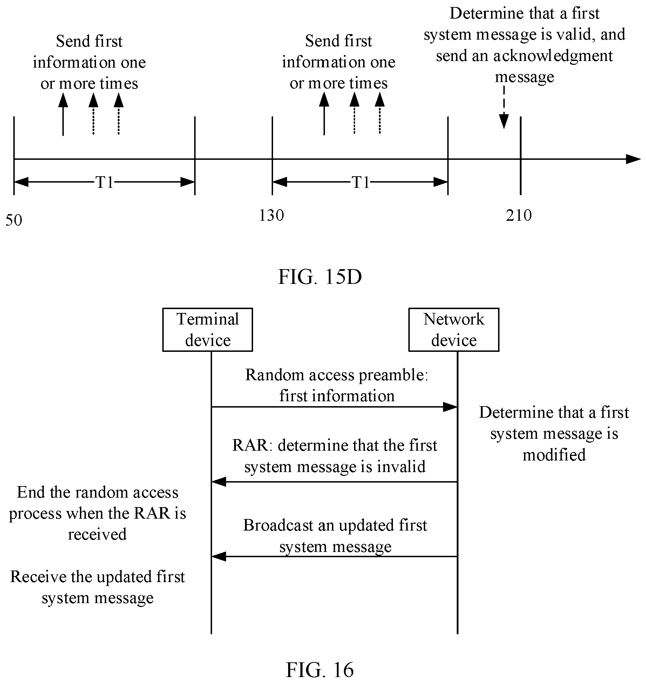

With reference to the method flowchart shown in FIG. 14, several possible embodiments are specifically described in the following:
Embodiment 11: FIG. 15A is a diagram of still another scenario in which a first system message is updated according to an embodiment of this application. As shown in FIG. 15A:
1. A terminal device may periodically send first information to a network device, to request to determine whether a first system message is valid. For example, the terminal device may send the first information at intervals of a first period. For example, the first period may be one MP. For example, the terminal device periodically sends the first information in each MP. FIG. 15 only shows that the terminal device sends the first information in an MP#1 and an MP#2.
2. After the terminal device receives the first information in the MP#1, if the network device determines that the first system message is invalid, the network device may send an updated first system message to the terminal device in the MP#2.
3. The terminal device continues to periodically send the first information to the network device.

Embodiment 12: FIG. 15B to FIG. 15D are diagrams of still another scenario in which a first system message is updated according to an embodiment of this application.

As shown in FIG. 15B:
1. The terminal device may periodically send the first information to the network device, to request to determine whether the first system message is valid. For example, the terminal device may send the first information at intervals of the first period. A time for sending the first information may be determined based on the first period and a next system frame number (a first system frame number) following a system frame number for receiving the first system message, and the first information is sent at intervals of the first period starting from the first system frame number. For example, the first information is sent, starting from a first subframe of the first system frame number, at intervals of duration corresponding to the first period. If the first subframe of the first system frame number is 50, and the first period is 80 ms, a subframe number for sending the first information may be 130, 210, 290, ..., and the subframe number may further include the subframe number 50.
2. After the terminal device receives the first information, if the network device determines that the first system message is invalid, the network device may send an updated first system message to the terminal device.
3. The terminal device continues to periodically send the first information to the network device.

As shown in FIG. 15C:
1. The terminal device may periodically send the first information to the network device to request to determine whether the first system message is valid. For example, the terminal device may send the first information at intervals of the first period. Specifically, a period of time is determined based on the first period, and the first information is sent one or more times in each period of time. For example, if a first subframe starts at 50 and the first period is 80 ms, the first information may be sent one or more times within T1 of duration between the subframe 50 and the subframe 130, and the first information is sent one or more times within T1 of duration between the subframe 130 and the subframe 210. A purpose of sending the first information a plurality of times is that the terminal device may fail to send the first information once, and sending the first information for the plurality of times may improve reliability of sending the first information to the network device.
2. After the terminal device receives the first information, if the network device determines that the first system message is invalid, the network device may send an updated first system message to the terminal device.
3. The terminal device continues to periodically send the first information to the network device.

As shown in FIG. 15D:
1. The terminal device may periodically send the first information to the network device to request to determine whether the first system message is valid. For example, the terminal device may send the first information at intervals of the first period. Specifically, a period of time is determined based on the first period, and the first information is sent one or more times in each period of time. For example, if a first subframe starts at 50 and the first period is 80 ms, the first information may be sent one or more times within T1 of duration between the subframe 50 and the subframe 130, and the first information is sent one or more times within T1 of duration between the subframe 130 and the subframe 210. A purpose of sending the first information a plurality of times is that the terminal device may fail to send the first information once, and sending the first information for the plurality of times may improve reliability of sending the first information to the network device.
2. Optionally, after the terminal device receives the first information, if the network device determines that the first system message is valid, the network device may send an acknowledgment message to the terminal device, where the acknowledgment message indicates that the first system message is valid.
3. The terminal device continues to periodically send the first information to the network device.

FIG. 16 to FIG. 19 are still other schematic flowcharts in which a first system message is updated according to an embodiment of this application. A terminal device may send first information by using a random access resource, where the random access resource may be a non-contention-based random access resource or a contention-based random access resource.

Embodiment 13: As shown in FIG. 16, the terminal device may send the first information by using the non-contention-based random access resource. Details are as follows:
1. The terminal device may send the first information to a network device, to request to determine whether the first system message is valid. For example, the terminal device may send a random access preamble to the network device, where the random access preamble indicates the first information.
2. The network device sends an RAR to the terminal device. Further, after receiving the first information, the network device determines whether the first system message is modified. If the first system message is modified, the network device may include information for determining that the first system message is invalid in the RAR. The terminal device ends the random access process when the RAR is received.
3. The network device may broadcast an updated first system message, and the terminal device detects the updated first system message, that is, may receive the updated first system message from the network device.

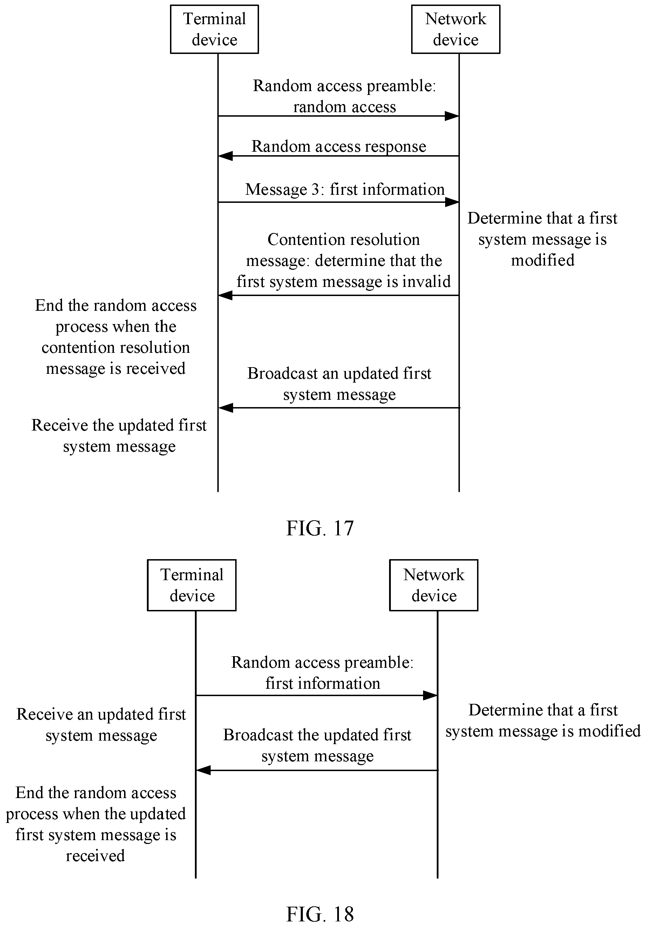

Embodiment 14: As shown in FIG. 17, the terminal device may send the first information by using the non-contention-based random access resource. Details are as follows:
1. The terminal device may send a random access preamble to a network device, where the random access preamble is used for random access, or may be understood as being used for uplink synchronization.
2. The network device sends an RAR to the terminal device.
3. The terminal device sends the first information to the network device through a random access message 3.
4. The network device sends a contention resolution message to the terminal device. Further, after receiving the first information, the network device determines whether the first system message is modified. If the first system message is modified, the network device may include information for determining that the first system message is invalid in the contention resolution message. The terminal device ends the random access process when the contention resolution message is received.
5. The network device may broadcast an updated first system message, and the terminal device detects the updated first system message, that is, may receive the updated first system message from the network device.

Embodiment 15: As shown in FIG. 18, the terminal device may send the first information by using the non-contention-based random access resource. Details are as follows:
1. The terminal device may send the first information to a network device, to request to determine whether the first system message is valid. For example, the terminal device may send a random access preamble to the network device, where the random access preamble indicates the first information.
2. The terminal device detects an updated first system message. After receiving the first information, the network device determines whether the first system message is modified. If the first system message is modified, the network device may broadcast an updated first system message. The terminal device ends the random access process when the updated first system message is received. Alternatively, optionally, the terminal device may send the first information one or more times through the random access preamble. After the first information is sent a specific quantity of times, the terminal device may end the random access process.

It should be noted that, compared with FIG. 16, in FIG. 18, the network device does not need to send the RAR, and may directly broadcast the updated first system message when it is determined that the first system message is modified. After sending the first information through the random access preamble, the terminal device does not expect to receive the RAR. Therefore, after sending the random access preamble, the terminal device may start to detect the updated first system message. In addition, a manner in which the random access process ends in FIG. 16 and FIG. 18 differs. In FIG. 16, the random access process ends when the terminal device receives the RAR. In FIG. 18, the random access process ends when the terminal device receives the updated first system message, or after the terminal device sends the first information through the random access preamble.

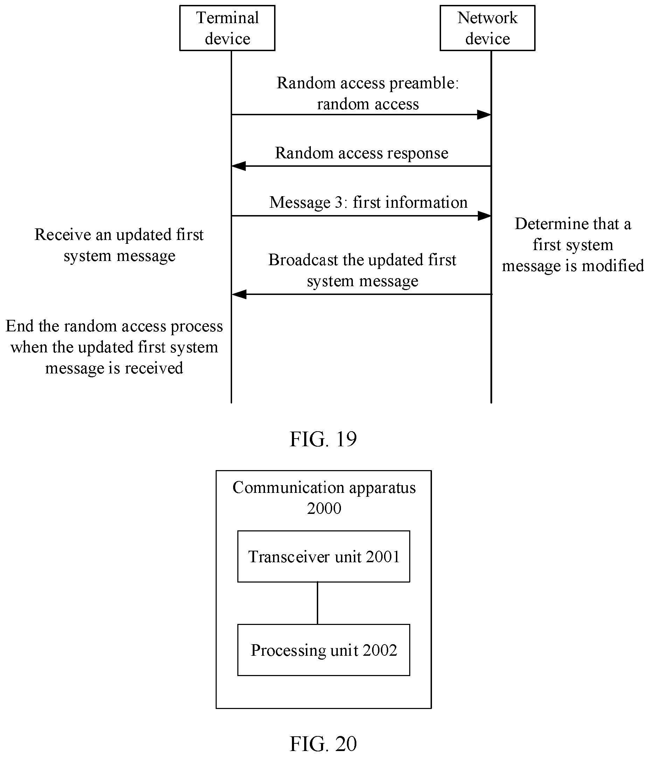

Embodiment 16: As shown in FIG. 19, the terminal device may send a first system message request by using a contention-based random access resource. Details are as follows:
1. The terminal device may send a random access preamble to a network device, where the random access preamble is used for random access, or may be understood as being used for uplink synchronization.
2. The network device sends an RAR to the terminal device.
3. The terminal device sends the first information to the network device through a random access message 3. After sending the message 3, the terminal device may detect an updated first system message.
4. After receiving the first information, the network device determines whether the first system message is modified. If the first system message is modified, the network device may broadcast the updated first system message. The terminal device ends the random access process when the updated first system message is received. Alternatively, optionally, the terminal device may send the first information one or more times through the message 3. After the first information is sent a specific quantity of times, the terminal device may end the random access process.

It should be noted that, compared with FIG. 17, in FIG. 19, the network device does not need to send the contention resolution message, and may directly broadcast the updated first system message when it is determined that the first system message is modified. After sending the first information through the message 3, the terminal device does not expect to receive the contention resolution message. Therefore, after sending the message 3, the terminal device may start to detect the updated first system message. In addition, a manner in which the random access process ends in FIG. 17 and FIG. 19 differs. In FIG. 17, the random access process ends when the terminal device receives the contention resolution message. In FIG. 19, the random access process ends when the terminal device receives the updated first system message, or after the terminal device sends the first information through the message 3.

The foregoing describes the method embodiments provided in embodiments of this application, and the following describes apparatus embodiments in embodiments of this application.

FIG. 20 is a diagram of a structure of a communication apparatus according to an embodiment of this application. The communication apparatus may be a terminal device, or may be an apparatus in a terminal device (for example, a chip, a chip system, or a circuit). As shown in FIG. 20, the communication apparatus 2000 includes at least a transceiver unit 2001 and a processing unit 2002.

In a possible implementation, when the communication apparatus 2000 is configured to implement the function of the terminal device in the method embodiment shown in FIG. 3:
The transceiver unit 2001 is configured to receive first indication information, and send a first system message request to request a first system message, where the first indication information indicates a system message update.

Optionally, the transceiver unit 2001 that is configured to receive the first indication information, and send the first system message request to request the first system message is specifically configured to: send the first system message request to request the first system message if the terminal device does not detect an updated first system message when the first indication information is received.

Optionally, the transceiver unit 2001 that is configured to receive the first indication information, and send the first system message request to request the first system message is specifically configured to: not send the first system message request to request the first system message if the terminal device detects an updated first system message when the first indication information is received.

Optionally, the processing unit 2002 that is configured to detect the updated first system message is specifically configured to: detect related information of the first system message; and if stored related information of the first system message is the same as the detected related information of the first system message, determine that no updated first system message is detected; or determine that no updated first system message is detected when the terminal device does not receive the first system message; or determine that no updated first system message is detected when the terminal device does not detect the first system message within a preset time after the first indication information is received, where the preset time is a time from receiving the first indication information to sending the first system message request; or detect related information of the first system message; and if stored related information of the first system message is different from the detected related information of the first system message, determine that the updated first system message is detected; or determine that the updated first system message is detected when the transceiver unit 2001 receives the first system message; or determine that the updated first system message is detected when the transceiver unit 2001 detects the first system message within a preset time after the first indication information is received.

Optionally, the preset time is before an end of a next MP following an MP in which the first indication information is received.

Optionally, the transceiver unit 2001 that is configured to receive the first indication information, and send the first system message request to request the first system message is specifically configured to: receive the first indication information, and send the first system message request within a first time to request the first system message.

Optionally, the first time is a moment of a latest available resource for sending the first system message request after the first indication information is received, the moment of the latest available resource for sending the first system message request is a moment with a shortest time interval between a moment of the resource and a moment at which the first indication information is received, the moment is a system frame number, a subframe, a slot, or a symbol of the resource, and the moment is a start moment or an end moment of the resource; or the first time is a current MP of the modification period MP in which the first indication information is received; or the first time is a moment of a latest available resource for sending the first system message request after the first indication information is received within the current MP; or the first time is a next MP following the modification period MP in which the first indication information is received; or the first time is before a time T1 of a next MP following the modification period MP in which the first indication information is received; or the first time is preset duration after the first indication information is received, or the first time is preset duration after a start time of a next MP following the modification period MP in which the first indication information is received.

Optionally, the resource is a random access resource, an uplink grant resource, or an uplink resource, and the random access resource is a contention-based random access resource, a non-contention-based random access resource, or a dedicated random access resource.

Optionally, the resource is the contention-based random access resource, and the transceiver unit 2001 that is configured to send the first system message request is specifically configured to: send the first system message request through a random access message 3. Alternatively, the resource is the non-contention-based random access resource, and the transceiver unit 2001 that is configured to send the first system message request is specifically configured to: send the first system message request through a random access preamble, where the random access preamble is used to request the first system message.

Optionally, the transceiver unit 2001 is further configured to receive a random access response, where the random access response indicates that random access succeeds.

Optionally, the transceiver unit 2001 is further configured to receive the updated first system information block.

Optionally, the first indication information is included in a paging message or a short message.

Optionally, the first indication information is included in a short message field in DCI format 1_0.

Optionally, the first system message is an SIB1.

Optionally, the first system message request is an on-demand SIB1 or a WUS.

In another possible implementation, when the communication apparatus 2000 is configured to implement the function of the terminal device in the method embodiment shown in FIG. 14:
The transceiver unit 2001 is configured to send first information, where the first information is used to request to determine whether a first system message is valid.

Optionally, the transceiver unit 2001 that is configured to send the first information is specifically configured to: periodically send the first information.

Optionally, the transceiver unit 2001 that is configured to periodically send the first information is specifically configured to: periodically send the first information within first duration, where one period is an MP of one cell, and the first duration is shorter than the MP of the cell.

Optionally, the transceiver unit 2001 that is configured to send the first information is specifically configured to: send the first information through a random access resource, an uplink grant resource, or an uplink resource, where the random access resource is a contention-based random access resource or a non-contention-based random access resource.

Optionally, the resource is the contention-based random access resource, and the sending the first information includes: sending the first information through a random access message 3. Alternatively, the resource is the non-contention-based random access resource, and the sending first information includes: sending the first information through a random access preamble, where the random access preamble indicates the first information.

Optionally, the transceiver unit 2001 is further configured to receive a random access response, where the random access response indicates that random access succeeds.

Optionally, the first indication information is included in a paging message or a short message.

Optionally, the first indication information is included in a short message field in DCI format 1_0.

Optionally, the first system message is an SIB1.

Optionally, the first system message request is an on-demand SIB1 or a WUS.

The communication apparatus may be a network device, or may be an apparatus in a network device (for example, a chip, a chip system, or a circuit), where:
In a possible implementation, when the communication apparatus 2000 is configured to implement the function of the network device in the method embodiment shown in FIG. 3:
The transceiver unit 2001 is configured to send first indication information to a terminal device, where the first indication information indicates a system message modification.

The transceiver unit 2001 is further configured to send an updated first system message when a first system message request is received from the terminal device.

Optionally, the transceiver unit 2001 is further configured to: not send the first system message or not page the terminal device when the first system message request from the terminal device is not received.

Optionally, the transceiver unit 2001 that is configured to send the updated first system message when the first system message request is received from the terminal device is specifically configured to: send the updated first system message within a second time when the first system message request is received from the terminal device.

Optionally, the second time is a next MP or a second next MP following a modification period MP of the first indication information; or the second time is a time T2 of a next MP following a modification period MP of the first indication information; or the second time is a preset time after the first system message request is received from the terminal device.

Optionally, the transceiver unit 2001 that is configured to not send the first system message when the first system message request from the terminal device is not received is specifically configured to: not send the updated first system message in the next MP following the modification period MP of the first indication information when the first system message request from the terminal device is not received.

Optionally, the transceiver unit 2001 that is configured to receive the first system message request from the terminal device is specifically configured to: receive the first system message request from the terminal device through a random access resource, an uplink grant resource, or an uplink resource, where the random access resource is a contention-based random access resource, a non-contention-based random access resource, or a dedicated random access resource.

In a possible implementation, the resource is the contention-based random access resource, and the transceiver unit 2001 that is configured to receive the first system message request from the terminal device is specifically configured to: receive the first system message request through a random access message 3. Alternatively, the resource is the non-contention-based random access resource, and the transceiver unit 2001 that is configured to receive the first system message request from the terminal device is specifically configured to: receive the first system message request through a random access preamble, where the random access preamble is used to request the first system message.

In a possible implementation, the transceiver unit 2001 is further configured to send a random access response, where the random access response indicates that random access succeeds.

Optionally, the first system message is an SIB1.

In another possible implementation, when the communication apparatus 2000 is configured to implement the function of the network device in the method embodiment shown in FIG. 14:
The transceiver unit 2001 is configured to receive first information, and determine whether a first system message is valid, where the first information is used to request to determine whether the first system message is valid.

If it is determined that the first system message is invalid, the transceiver unit 2001 is further configured to broadcast the first system message and/or send second information to a terminal device, where the second information indicates whether the first system message is valid.

Optionally, the transceiver unit 2001 is further configured to: if it is determined that the first system message is valid, broadcast an acknowledgment message to the terminal device, where the acknowledgment message is used to confirm that the first system message is valid.

Optionally, that the first system message is valid includes: if it is detected that related information of the first system message is the same as related information of the first system message used by the terminal device, the first system message is valid; or if it is detected that related information of the first system message is different from related information of the first system message used by the terminal device, the first system message is invalid.

Optionally, the transceiver unit 2001 that is configured to receive the first information is specifically configured to: receive the first information through a random access resource, an uplink grant resource, or an uplink resource, where the random access resource is a contention-based random access resource or a non-contention-based random access resource.

Optionally, the resource is the contention-based random access resource, and the transceiver unit 2001 that is configured to receive the first information is specifically configured to: receive the first information through a random access message 3. Alternatively, the resource is the non-contention-based random access resource, and the transceiver unit 2001 that is configured to receive the first information is specifically configured to: receive the first information through a random access preamble, where the random access preamble indicates the first information.

Optionally, the transceiver unit 2001 is further configured to send a random access response, where the random access response indicates that random access succeeds.

It may be understood that for specific implementations of the transceiver unit 2001, refer to the method embodiments in FIG. 3 to FIG. 19.

Optionally, the first system message is an SIB1.

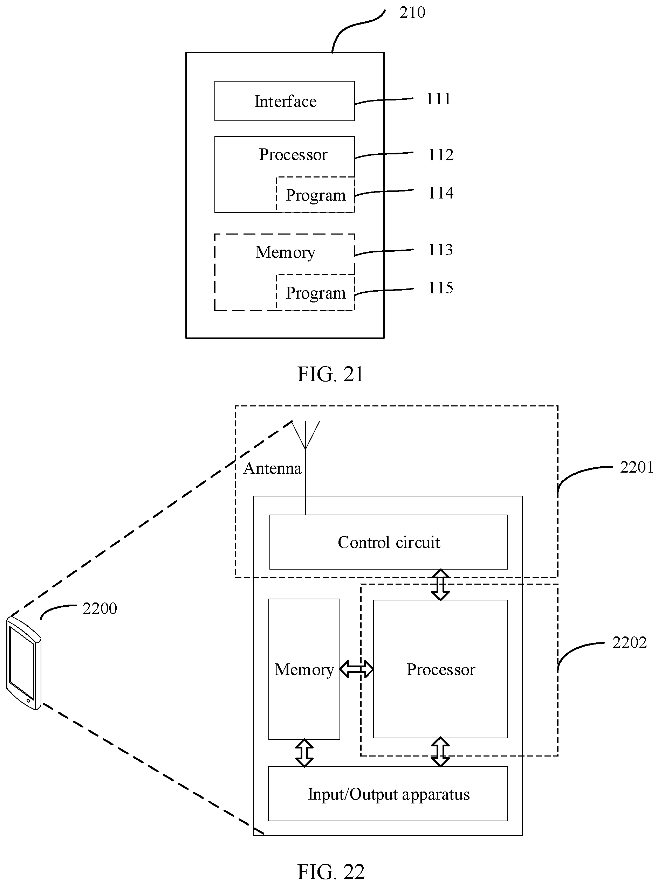

FIG. 21 is a diagram of a structure of another communication apparatus according to an embodiment of this application. The apparatus 210 is configured to implement the function of the network element in this application. For example, the network element may be an access network device, a terminal device, a DU, or a CU. The apparatus 210 may be the network element, or an apparatus that can be installed in the network element, or an apparatus that can be used in conjunction with the network element. This is not limited. For example, the apparatus may be a chip or a chip system. As shown in FIG. 21, the apparatus 210 includes an interface 111 and a processor 112. Optionally, the processor 112 is configured to execute a program 114. The processor 112 may store the program 114, or obtain the program 114 from another component or device (for example, downloading from the memory 113, from a third-party website, or the like). Optionally, the apparatus 210 includes a memory 113. The memory 113 is configured to store a program 115. The program 115 may be stored in advance, or may be loaded subsequently. Optionally, the memory 113 may be further configured to store necessary data. These components work together to provide the various functions described in this application.

The processor 112 may include one or more processors as a combination of computing devices. The processor 112 may separately include one or more of the following: a microprocessor, a microcontroller, a digital signal processor (DSP), a digital signal processing device (DSPD), an application-specific integrated circuits (ASIC), a field programmable gate array (FPGA), a programmable logic device (PLD), gating logic, transistor logic, a discrete hardware circuit, a processing circuit, or other suitable hardware or firmware, and/or a combination of hardware and software configured to perform the various functions described in this application. The processor 112 may be a general-purpose processor, a dedicated processor, or the like. For example, the processor 112 may be a baseband processor or a central processing unit. The baseband processor may be configured to process a communication protocol and communication data. The central processing unit may be configured to execute a software program and process data in the software program.

The interface 111 may include any suitable hardware or software for allowing for communication with one or more computer devices (for example, network elements in this application). For example, in some embodiments, the interface 111 may include a terminal and/or a pin for coupling a wire for a wired connection or coupling a wireless transceiver for a wireless connection. In some embodiments, the interface 111 may include a transmitter, a receiver, a transceiver, and/or an antenna. The interface may be configured to enable communication between computer devices (for example, network elements in this application) by using any available protocol (for example, the 3GPP standard protocol).

The program in this application means software in a broad sense. The software may be program code, a program, a subroutine, an instruction set, code, a code segment, a software module, an application program, a software application program, or the like. The program may be run in a processor and/or a computer to perform the various functions and/or processes described in this application.

The memory 113 may store necessary data required when the processor 112 executes software. The memory 113 may be implemented using any suitable storage technology. For example, the memory 113 may be any available storage medium accessible to the processor and/or the computer. A non-limiting example of the storage medium includes: a random access memory (random access memory, RAM), a read-only memory (read-only memory, ROM), an electrically erasable programmable read-only memory (electrically erasable programmable read-only memory, EEPROM), an optical disc read-only memory (compact disc read-only memory, CD-ROM), a removable medium, optical disk storage, a magnetic disk storage medium, a magnetic storage device, flash memory, a register, a status memory, a remote installation memory, a local or remote memory component, or any other medium capable of carrying or storing software, data, or information accessible by the processor/the computer.

The memory 113 and the processor 112 may be disposed separately, or may be integrated together. The processor 112 may read information from the memory 113, and store and/or write information in the memory. The memory 113 may be integrated into the processor 112. The processor 112 and the memory 113 may be disposed in an integrated circuit (for example, an application-specific integrated circuit (application-specific integrated circuit, ASIC)). The integrated circuit may be disposed in the network element or another network node in the present disclosure.

Optionally, the apparatus 210 in embodiments of this application may be configured to perform the method described in embodiments of this application.

FIG. 22 is a diagram of a structure of a terminal device according to an embodiment of this application. For ease of description, FIG. 22 only shows main components of the terminal device. As shown in FIG. 22, the terminal device 2200 includes a processor, a memory, a control circuit, an antenna, and an input/output apparatus. The processor is mainly configured to: process a communication protocol and communication data, control an entire terminal, execute a software program, and process data of the software program. The memory is mainly configured to store a software program and data. The radio frequency circuit is mainly configured to convert baseband signals and radio frequency signal and processing of the radio frequency signals. The antenna is mainly configured to send and receive radio frequency signals in the form of electromagnetic waves. The input/output apparatus, for example, a touch screen, a display, or a keyboard, is mainly configured to receive data input by a user and output data to the user.

When the terminal is powered on, the processor can read a software program in a storage unit, parse and execute instructions of the software program, and process data of the software program. When data needs to be transmitted wirelessly, after performing baseband processing on the data to be transmitted, the processor outputs a baseband signal to the radio frequency circuit, and the radio frequency circuit performs processing on the baseband signal and transmits the radio frequency signal to the outside in the form of electromagnetic waves through the antenna. When data is sent to the terminal, the radio frequency circuit receives the radio frequency signal through the antenna, converts the radio frequency signal into a baseband signal, and outputs the baseband signal to the processor. The processor converts the baseband signal into data and processes the data.

For ease of description, only one memory and one processor are shown in FIG. 22. In an actual terminal, there may be a plurality of processors and memories. The memory may also be referred to as a storage medium, a storage device, or the like, which is not limited in embodiments of this application.

In an optional implementation, the processor may include a baseband processor and a central processing unit. The baseband processor is configured to mainly process communication protocols and communication data, and the central processing unit is configured to mainly control the entire terminal, execute software programs, and process data of the software programs. The processor in FIG. 22 integrates functions of the baseband processor and the central processing unit. A person skilled in the art may understand that the baseband processor and the central processing unit may alternatively be independent processors, and may be interconnected by using a technology such as a bus. A person skilled in the art may understand that the terminal may include a plurality of baseband processors to adapt to different network standards. The terminal may include a plurality of central processing units, to enhance its processing capability. Various components of the terminal can be connected by various buses. The baseband processor may also be described as a baseband processing circuit or a baseband processing chip. The central processing unit may also be described as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit with transmission and reception functions may be considered as a transceiver unit 2201 of the terminal device 2200, and the processor with the processing function may be considered as the processing unit 2202 of the terminal device 2200. As shown in FIG. 22, the terminal device 2200 includes a transceiver unit 2201 and a processing unit 2202. The transceiver unit may also be referred to as a transceiver, a transceiver, a transceiver apparatus, or the like. Optionally, a component, for implementing a receiving function, of the transceiver unit 2201 may be considered as a receiving unit, and a component, for implementing a transmitting function, of the transceiver unit 2201 may be considered as a transmitting unit, that is, the transceiver unit 2201 includes a receiving unit and a transmitting unit. For example, the receiving unit may also be referred to as a receiver machine, a receiver, a receiving circuit, or the like. The transmitting unit may be referred to as a transmitter machine, a transmitter, a transmitting circuit, or the like. Optionally, the receiving unit and the transmitting unit may be an integrated unit, or may be a plurality of independent units. The receiving unit and the transmitting unit may be located in one geographical location, or may be distributed across a plurality of geographical locations.

In an embodiment, the transceiver unit 2201 is configured to perform the operation performed by the transceiver unit 2001 in the foregoing embodiments. The terminal device 2200 may be further configured to perform various methods performed by the terminal device in the foregoing method embodiments. Details are not described again.

An embodiment of this application further provides a computer-readable storage medium. The computer-readable storage medium stores a computer program. When the program is executed by a processor, the procedures related to the terminal device and the network device in the communication method provided in the foregoing method embodiments may be implemented.

An embodiment of this application further provides a computer program product. When the computer program product is run on a computer or a processor, the computer or the processor performs one or more steps in any one of the foregoing communication methods. If the component modules of the foregoing device is implemented in the form of a software functional unit and sold or used as an independent product, the component modules may be stored in a computer-readable storage medium.

An embodiment of this application further provides a chip system. The chip system includes at least one processor and a communication interface. The communication interface and the at least one processor are interconnected through a line. The at least one processor is configured to run a computer program or instructions, to perform some or all of the steps of any one of the methods described in the corresponding foregoing method embodiments. The chip system may include a chip, or may include a chip and another discrete component.

An embodiment of this application further provides a communication system. The system includes a terminal device and a network device. For specific descriptions, refer to the foregoing methods.

It should be understood that, the memory mentioned in embodiments of this application may be a volatile memory or a non-volatile memory, or may include both a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static rAM, SRAM), a dynamic random access memory (dynamic RAM, DRAM), a synchronous dynamic random access memory (synchronous dRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). The memory is any other medium that can be configured to carry or store desired program code in the form of instructions or data structures and can be accessed by a computer, but is not limited thereto. Alternatively, the memory in embodiments of this application may be a circuit or any other apparatus that can implement a storage function, and is configured to store a program instruction and/or data.

It should be understood that the processor mentioned in embodiments of this application may be a central processing unit (central processing unit, CPU). The processor may alternatively be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate or transistor logic device, or a discrete hardware component, the memory (storage module) is integrated into the processor.

It should be noted that the memories described in this specification are intended to include, but are not limited to, these and any other proper types of memories.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that units and algorithm steps of the examples described with reference to embodiments provided in this specification can be implemented through electronic hardware or a combination of computer software and electronic hardware. Whether the functions are executed by hardware or software depends on specific applications and design constraint conditions of the technical solutions. A person skilled in the art can a use different method for each specific application to implement a described function, but this shall not be considered as departing from the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual coupling or direct coupling or communication connection may be through some interfaces, and the indirect coupling or communication connection of the apparatus or the unit may be in an electrical, mechanical, or other forms.

The units described as separate components may or may not be physically separated. The components displayed as units may or may not be physical units, and may be located in one position, or may be distributed on a plurality of network units. Some or all of the units may be selected based on actual requirements to achieve the objectives of the solutions of embodiments.

In addition, the functional units in embodiments of this application may be integrated in one processing unit, each of the units may stand alone physically, or two or more units may be integrated in one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

A sequence of the steps of the method in embodiments of this application may be adjusted, and certain steps may be combined or removed according to an actual requirement.

The modules/units in the apparatuses in embodiments of this application may be combined, divided, and deleted according to an actual requirement.

The foregoing embodiments are merely intended to describe the technical solutions in this application, but not intended to limit this application. Although this application is described in detail with reference to the foregoing embodiments, a person of ordinary skill in the art should understand that modifications may still be made to the technical solutions described in the foregoing embodiments or equivalent replacements may still be made to some technical features thereof. However, these modifications or replacements do not make the essence of the corresponding technical solutions depart from the scope of the technical solutions in embodiments of this application.

## Claims

1. A method for system message update, applied to a terminal device, wherein the method comprises:
receiving first indication information, and sending a first system message request to request a first system message, wherein the first indication information indicates a system message modification.

2. The method according to claim 1, wherein the receiving first indication information, and sending a first system message request to request a first system message comprises:
sending the first system message request to request the first system message if the terminal device does not detect an updated first system message when the first indication information is received.

3. The method according to claim 1, wherein the receiving first indication information, and sending a first system message request to request a first system message comprises:
skipping sending the first system message request to request the first system message if the terminal device detects an updated first system message when the first indication information is received.

4. The method according to claim 2 or 3, wherein detecting, by the terminal device, the updated first system message comprises:
detecting, by the terminal device, related information of the first system message; and if stored related information of the first system message is the same as the detected related information of the first system message, determining that no updated first system message is detected; or
determining that no updated first system message is detected when the terminal device does not receive the first system message; or
determining that no updated first system message is detected when the terminal device does not detect the first system message within a preset time after the first indication information is received, wherein the preset time is a time from receiving the first indication information to sending the first system message request; or
detecting, by the terminal device, related information of the first system message; and if stored related information of the first system message is different from the detected related information of the first system message, determining that the updated first system message is detected; or
determining that the updated first system message is detected when the terminal device receives the first system message; or
determining that the updated first system message is detected when the terminal device detects the first system message within a preset time after the first indication information is received.

5. The method according to claim 4, wherein the preset time is before an end of a next MP following a modification period MP in which the first indication information is received.

6. The method according to claim 1 or 2, wherein the receiving first indication information, and sending a first system message request to request a first system message comprises:
receiving the first indication information, and sending the first system message request within a first time to request the first system message.

7. The method according to claim 6, wherein
the first time is a moment of a latest available resource for sending the first system message request after the first indication information is received, the moment of the latest available resource for sending the first system message request is a moment with a shortest time interval between a moment of the resource and a moment at which the first indication information is received, and the moment is a system frame number, a subframe, a slot, or a symbol of the resource; or
the first time is a current MP of the modification period MP in which the first indication information is received; or
the first time is a moment of a latest available resource for sending the first system message request after the first indication information is received within the current MP; or
the first time is a next MP following the modification period MP in which the first indication information is received; or
the first time is before a time T1 of a next MP following the modification period MP in which the first indication information is received; or
the first time is preset duration after the first indication information is received, or the first time is preset duration after a start time of a next MP following the modification period MP in which the first indication information is received.

8. The method according to claim 7, wherein the resource is a random access resource, an uplink grant resource, or an uplink resource, and the random access resource is a contention-based random access resource, a non-contention-based random access resource, or a dedicated random access resource.

9. The method according to claim 8, wherein
the resource is the contention-based random access resource, and the sending the first system message request comprises:
sending the first system message request through a random access message 3; or
the resource is the non-contention-based random access resource, and the sending the first system message request comprises:
sending the first system message request through a random access preamble, wherein the random access preamble is used to request the first system message.

10. The method according to claim 9, wherein the method further comprises:
receiving a random access response, wherein the random access response indicates that random access succeeds.

11. The method according to any one of claims 1 to 10, wherein the method further comprises:
receiving the updated first system message.

12. The method according to any one of claims 1 to 11, wherein the first indication information is comprised in a paging message or a short message.

13. The method according to claim 12, wherein the first indication information is comprised in a short message field in downlink control information DCI format 1_0.

14. The method according to any one of claims 1 to 13, wherein the first system message is a system information block 1 SIB1.

15. The method according to any one of claims 1 to 14, wherein the first system message request is an on-demand system information block 1 SIB1 or a wake up signal WUS.

16. A method for system message update, applied to a network device, wherein the method comprises:
sending first indication information to a terminal device, wherein the first indication information indicates a system message modification; and
sending an updated first system message when a first system message request is received from the terminal device.

17. The method according to claim 16, wherein the method further comprises:
skipping sending the first system message or skipping paging the terminal device when the first system message request from the terminal device is not received.

18. The method according to claim 16, wherein the sending an updated first system message when a first system message request is received from the terminal device comprises:
sending the updated first system message within a second time when the first system message request is received from the terminal device.

19. The method according to claim 18, wherein
the second time is a next MP or a second next MP following a modification period MP of the first indication information; or
the second time is a time T2 of a next MP following a modification period MP of the first indication information; or
the second time is a preset time after the first system message request is received from the terminal device.

20. The method according to claim 17, wherein the skipping sending the first system message when the first system message request from the terminal device is not received comprises:
skipping sending the updated first system message in the next MP following the modification period MP of the first indication information when the first system message request from the terminal device is not received.

21. The method according to any one of claims 16, 18 and 19, wherein the receiving the first system message request from the terminal device comprises:
receiving the first system message request from the terminal device through a random access resource, an uplink grant resource, or an uplink resource, wherein the random access resource is a contention-based random access resource, a non-contention-based random access resource, or a dedicated random access resource.

22. The method according to claim 21, wherein
the resource is the contention-based random access resource, and the receiving the first system message request from the terminal device comprises:
receiving the first system message request through a random access message 3; or
the resource is the non-contention-based random access resource, and the receiving the first system message request from the terminal device comprises:
receiving the first system message request through a random access preamble, wherein the random access preamble is used to request the first system message.

23. The method according to claim 22, wherein the method further comprises:
sending a random access response, wherein the random access response indicates that random access succeeds.

24. The method according to any one of claims 16 to 23, wherein the first indication information is comprised in a paging message or a short message.

25. The method according to claim 24, wherein the first indication information is comprised in a short message field in downlink control information DCI format 1_0.

26. The method according to any one of claims 16 to 25, wherein the first system message is a system information block 1 SIB1.

27. The method according to any one of claims 16 to 26, wherein the first system message request is an on-demand system information block 1 SIB1 or a wake up signal WUS.

28. A method for system message update, applied to a terminal device, wherein the method comprises:
sending first information, wherein the first information is used to request to determine whether a first system message is valid.

29. The method according to claim 28, wherein the sending first information comprises:
periodically sending the first information.

30. The method according to claim 29, wherein the periodically sending the first information comprises:
periodically sending the first information within first duration, wherein one period is an MP of one cell, and the first duration is shorter than the MP of the cell.

31. The method according to any one of claims 28 to 30, wherein the sending first information comprises:
sending the first information through a random access resource, an uplink grant resource, or an uplink resource, wherein the random access resource is a contention-based random access resource or a non-contention-based random access resource.

32. The method according to claim 31, wherein
the resource is the contention-based random access resource, and the sending first information comprises: sending the first information through a random access message 3; or
the resource is the non-contention-based random access resource, and the sending first information comprises: sending the first information through a random access preamble, wherein the random access preamble indicates the first information.

33. The method according to claim 31 or 32, wherein the method further comprises:
receiving a random access response, wherein the random access response indicates that random access succeeds.

34. The method according to any one of claims 28 to 33, wherein the first system message is a system information block 1 SIB1.

35. A method for system message update, applied to a network device, wherein the method comprises:
receiving first information, and determining whether a first system message is valid, wherein the first information is used to request to determine whether the first system message is valid; and
if it is determined that the first system message is invalid, broadcasting the first system message and/or sending second information to a terminal device, wherein the second information indicates whether the first system message is valid.

36. The method according to claim 35, wherein the method further comprises:
if it is determined that the first system message is valid, broadcasting an acknowledgment message to the network device, wherein the acknowledgment message is used to confirm that the first system message is valid.

37. The method according to claim 35 or 36, wherein that the first system message is valid comprises:
if it is detected that related information of the first system message is the same as related information of the first system message used by the terminal device, the first system message is valid; or if it is detected that related information of the first system message is different from related information of the first system message used by the terminal device, the first system message is invalid.

38. The method according to any one of claims 35 to 37, wherein the receiving first information comprises:
receiving the first information through a random access resource, an uplink grant resource, or an uplink resource, wherein the random access resource is a contention-based random access resource or a non-contention-based random access resource.

39. The method according to claim 38, wherein
the resource is the contention-based random access resource, and the receiving first information comprises:
receiving the first information through a random access message 3; or
the resource is the non-contention-based random access resource, and the receiving first information comprises:
receiving the first information through a random access preamble, wherein the random access preamble indicates the first information.

40. The method according to any one of claims 35 to 39, wherein the method further comprises:
sending a random access response, wherein the random access response indicates that random access succeeds.

41. The method according to any one of claims 35 to 40, wherein the first system message is a system information block 1 SIB1.

42. A communication apparatus, wherein the communication apparatus comprises a processor and a storage medium, the storage medium stores instructions, and when the instructions are run by the processor, the method according to any one of claims 1 to 15, claims 16 to 27, claims 28 to 34, or claims 35 to 41 is implemented.

43. A computer-readable storage medium, wherein the computer-readable storage medium comprises instructions, and when the instructions are run by a processor, the method according to any one of claims 1 to 15, claims 16 to 27, claims 28 to 34, or claims 35 to 41 is implemented.

44. A communication system, comprising a terminal device and a network device, wherein the terminal device is configured to implement the method according to any one of claims 1 to 15 or claims 28 to 34, and the network device is configured to implement the method according to any one of claims 16 to 27 or claims 35 to 41.
